(19) Europäisches Patentamt
European Patent Office
Office européen des brevets

(11) **EP 4 462 672 B1**

(12) **EUROPEAN PATENT SPECIFICATION**

(45) Date of publication and mention
of the grant of the patent:
**03.06.2026 Bulletin 2026/23**

(21) Application number: **24732155.7**

(22) Date of filing: **27.02.2024**

(51) International Patent Classification (IPC):
*H02P 27/06* (2006.01)    *F16C 32/04* (2006.01)
*H02K 7/09* (2006.01)    *H02K 1/276* (2022.01)
*H02K 7/14* (2006.01)    *H02K 21/22* (2006.01)
*H02P 21/00* (2016.01)    *H02P 21/05* (2006.01)
*H02P 21/22* (2016.01)    *H02P 25/03* (2016.01)
*H02P 25/22* (2006.01)    *H02K 1/278* (2022.01)

(52) Cooperative Patent Classification (CPC):
**H02K 7/09; F16C 32/0442; F16C 32/0446;**
**F16C 32/0451; F16C 32/0457; F16C 32/0461;**
**H02K 1/2766; H02K 1/278; H02P 21/0025;**
**H02P 21/05; H02P 21/22; H02P 25/03; H02P 25/22;**
H02K 7/14; H02K 21/22;                   (Cont.)

(86) International application number:
**PCT/JP2024/006944**

(87) International publication number:
**WO 2024/202811 (03.10.2024 Gazette 2024/40)**

(54) **BEARINGLESS MOTOR SYSTEM, COMPRESSOR, AND REFRIGERATION DEVICE**

LAGERLOSES MOTORSYSTEM, VERDICHTER UND KÜHLVORRICHTUNG

SYSTÈME DE MOTEUR SANS PALIER, COMPRESSEUR ET DISPOSITIF DE RÉFRIGÉRATION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **31.03.2023 JP 2023056899**

(43) Date of publication of application:
**13.11.2024 Bulletin 2024/46**

(73) Proprietor: **DAIKIN INDUSTRIES, LTD.**
**Osaka-shi, Osaka 530-0001 (JP)**

(72) Inventors:
• **MIWA, Daiki**
**Osaka-shi, Osaka 5300001 (JP)**
• **SAKAWAKI, Atsushi**
**Osaka-shi, Osaka 5300001 (JP)**
• **INOUE, Tatsuki**
**Osaka-shi, Osaka 5300001 (JP)**

(74) Representative: **Hoffmann Eitle**
**Patent- und Rechtsanwälte PartmbB**
**Arabellastraße 30**
**81925 München (DE)**

(56) References cited:
**JP-A- 2016 042 768    JP-A- 2016 042 768**
**JP-A- 2021 090 256    JP-A- 2021 090 256**

(52) Cooperative Patent Classification (CPC): (Cont.)
H02K 2213/03

**Description**

TECHNICAL FIELD

The present invention relates to a bearingless motor system, a compressor, and a refrigeration apparatus.

BACKGROUND ART

A bearingless motor in which a motor and a magnetic circuit of a magnetic bearing are integrated is typically known (JP 2004-120886 A). The bearingless motor includes a stator provided with slots in which a motor winding and a shaft support winding are disposed. Accordingly, one pair of a rotor and a stator can generate both a motor torque for rotating a rotary shaft of the motor and a shaft support force for supporting the rotary shaft in a non-contact manner. The shaft support force acts on the rotary shaft in the radial direction and causes the rotary shaft to levitate at the center of the stator.

A bearingless motor system is also known from JP 2021 090256 A forming the basis for the preamble of claim 1. Another bearingless motor system is described in JP 2016 042768 A.

SUMMARY OF THE INVENTION

TECHNICAL PROBLEMS

In a typical bearingless motor, a shaft support current is controlled so that a desired shaft support force is obtained, on the assumption that the relationship between the shaft support force and the shaft support current is independent from an electrical rotational angle (an electrical angle: an angle obtained by multiplication of the mechanical rotational angle of the rotor by the number of pole pairs of the motor) of the rotor of the motor.

In practice, however, the relationship between the shaft support force and the shaft support current changes depending on the rotational angle (the electrical angle) of the rotor due to the influence of the spatial harmonic determined by the shape of the magnetic circuit of the motor. Thus, there is a problem that the rotary shaft radially vibrates and at worst a touchdown occurs.

It is an object of the present invention to provide a bearingless motor capable of generating a desired shaft support force independently from the rotational angle (the electrical angle) of a rotor.

SOLUTION TO THE PROBLEMS

A first aspect of the present invention is directed to a bearingless motor system (100) including the features of claim 1.

In the first aspect, a voltage or a current on which a harmonic obtained by multiplication of the rotational frequency of the bearingless motor (110) by a natural number of two or more is superimposed is supplied to the shaft support winding (113) or the motor winding (115). Accordingly, independently from the rotational angle (or the electrical angle) of the rotor (111), a desired shaft support force can be generated, and thus the rotary shaft (101) can be rotated smoothly.

In the first aspect, the fluctuation in the magnitude of the mutual inductance between the shaft support winding (113) and the motor winding (115) depending on the rotational angle (the electrical angle) of the rotor (111) of the bearingless motor (110) due to the spatial harmonic determined by the characteristics of the magnetic circuit of the bearingless motor (110) can be reduced.

A second aspect of the present invention is directed to a bearingless motor system (100) including the features of claim 2.

In the second aspect, the fluctuation in the magnitude of the mutual inductance between the shaft support winding (113) and the motor winding (115) depending on the rotational angle (the electrical angle) of the rotor (111) due to the spatial harmonic determined by the characteristics of the magnetic circuit of the bearingless motor (110) can be reduced.

A third aspect of the present invention is an embodiment of the first or second aspect. In the second aspect, the control unit (200) adds a correction signal to a control signal of one or both of the first inverter (114) and the second inverter (116), thereby commanding the one or both of the first inverter (114) and the second inverter (116) to output the voltage or the current on which the harmonic is superimposed.

In the third aspect, the harmonic that cancels the influence of the spatial harmonic determined by the characteristics of the magnetic circuit of the bearingless motor (110) can be superimposed on the control signal of the first inverter (114) serving for shaft support or the control signal of the second inverter (116) serving for motor drive.

Further, in the third aspect of the present invention, the correction signal is determined based on an electrical angle of the rotor (111), a current value of the shaft support winding (113), and a current value of the motor winding (115).

In the third aspect, the correction signal is added to the control signal of one or both of the first inverter (114) and the second inverter (116) so that the influence of the spatial harmonic determined by the characteristics of the magnetic circuit of the bearingless motor (110) can be cancelled.

A fourth aspect of the present invention is directed to a compressor (10) including: the bearingless motor system (100) of any one of the first to third aspects; and a compression mechanism (102, 103) driven by the bearingless motor system (100) to compress a fluid.

In the fourth aspect, the bearingless motor system (100) forming the compressor (10) can generate a desired shaft support force independently from the rotational angle (the electrical angle) of the rotor (111), and thus the compressor (10) can operate stably with higher reliability.

A fifth aspect of the present invention is directed to a refrigeration apparatus (1) including the compressor (10) of the fourth aspect.

In the fifth aspect, the bearingless motor system (100) forming the compressor (10) used in the refrigeration apparatus (1) can generate a desired shaft support force independently from the rotational angle (the electrical angle) of the rotor (111), and thus the refrigeration apparatus (1) can operate stably with higher reliability.

BRIEF DESCRIPTION OF THE DRAWINGS

FIG. 1 is a schematic diagram showing a schematic configuration of a compressor including a bearingless motor system of a first embodiment.

FIG. 2 shows an electric circuit configuration of the bearingless motor system of the first embodiment.

FIG. 3 shows an electric circuit configuration of the bearingless motor system of the first embodiment.

FIG. 4 shows an example of a cross-sectional configuration of the bearingless motor in a direction perpendicular to a rotary shaft of the bearingless motor.

FIG. 5 shows another example of a cross-sectional configuration in the direction perpendicular to the rotary shaft of the bearingless motor.

FIG. 6 shows that a shaft support force of the bearingless motor fluctuates depending on an electrical angle.

FIG. 7 shows a configuration of a control unit of the bearingless motor system of the first embodiment.

FIG. 8 shows an example where, in the control unit shown in FIG. 7, a correction signal is added to a control signal of an inverter serving for shaft support.

FIG. 9 illustrates an example of calculation of the correction amount in the control unit of the bearingless motor system of the first embodiment.

FIG. 10 illustrates an example of calculation of the correction amount in the control unit of the bearingless motor system of the first embodiment.

FIG. 11 illustrates another example of calculation of the correction amount in the control unit of the bearingless motor system of the first embodiment.

FIG. 12 illustrates another example of calculation of the correction amount in the control unit of the bearingless motor system of the first embodiment.

FIG. 13 shows a waveform of a current output from the inverter serving for shaft support in the bearingless motor system of the first embodiment.

FIG. 14 is a schematic configuration diagram of an air conditioner (an example of a refrigeration apparatus) of a second embodiment.

FIG. 15 is a schematic diagram showing a variation of a configuration of a compressor applicable to the air conditioner of the second embodiment.

FIG. 16 is a schematic diagram showing a variation of the configuration of the compressor applicable to the air conditioner of the second embodiment.

FIG. 17 is a schematic diagram showing a variation of the configuration of the compressor applicable to the air conditioner of the second embodiment.

FIG. 18 is a schematic diagram showing a variation of the configuration of the compressor applicable to the air conditioner of the second embodiment.

FIG. 19 is a schematic diagram showing a variation of the configuration of the compressor applicable to the air conditioner of the second embodiment.

DESCRIPTION OF EMBODIMENTS

Embodiments of the present invention will be described below with reference to the drawings. The embodiments below are merely exemplary ones in nature, and are not intended to limit the scope, applications, or use of the invention. In the drawings, the same reference characters denote the same constituent elements, but the dimensions in the drawings such as the lengths, widths, thicknesses, and depths are changed as appropriate from the actual scales for the sake of clarity and simplification of the drawings, and not necessarily correspond to the actual relative dimensions.

(First Embodiment)

<Configuration of Bearingless Motor System>

The following describes an example of a compressor (10) where a bearingless motor system (100) of a first embodiment is provided inside a pressure vessel (150). The usage of the bearingless motor system (100) is not limited.

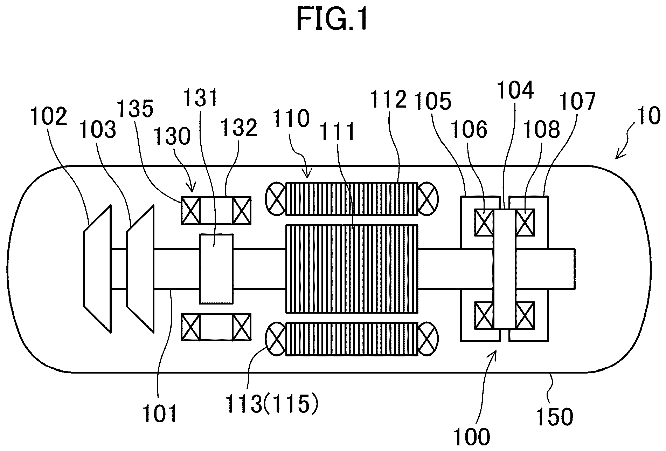

As shown in FIG. 1, the bearingless motor system (100) includes, as main components, a rotary shaft (101), thrust magnetic bearings (105, 107), a bearingless motor (110), and a radial magnetic bearing (130). In the following description, the direction along the axis of the rotary shaft (101) is referred to as an "axial direction," the direction along a circle having a center matching with the rotary shaft (101) is referred to as a "circumferential direction," and the direction perpendicular to the axis of the rotary shaft (101) is referred to as a "radial direction."

The rotary shaft (101) includes axial ends, one of which is provided with a first impeller (102) and a second impeller (103) that constitute a compression mechanism of the compressor (10). In FIG. 1, elements such as pipes constituting the compression mechanism, a control unit, a power source unit, and the like are omitted.

The thrust magnetic bearings (105, 107) are disposed at the other one of the axial ends of the rotary shaft (101), and apply the electromagnetic force to the rotary shaft (101) in both axial directions. Specifically, a disk (104) expanding in the radial direction is provided on the rotary shaft (101), and also the first thrust magnetic bearing (105) for applying the electromagnetic force to the disk (104) in one of the axial directions and the second thrust magnetic bearing (107) for applying the electromagnetic force to the disk (104) in the other one of the axial directions are disposed. Accordingly, the thrust magnetic bearings (105, 107) can support the disk (104) in a non-contact manner using the electromagnetic force.

The first thrust magnetic bearing (105) includes a first electromagnet coil (106). The second thrust magnetic bearing (107) includes a second electromagnet coil (108). The thrust magnetic bearings (105, 107) can control the position of the disk (104), that is, the axial position of the rotary shaft (101), by controlling the current flowing through the first and second electromagnet coils (106, 108).

The bearingless motor (110) rotationally drives the rotary shaft (101) by the electromagnetic force and supports the radial load of the rotary shaft (101) in a non-contact manner. The radial magnetic bearing (130) supports the radial load of the rotary shaft (101) in a non-contact manner. The bearingless motor (110) and the radial magnetic bearing (130) are arranged in the axial direction of the rotary shaft (101). In this example, the bearingless motor (110) is located near the thrust magnetic bearings (105, 107), and the radial magnetic bearing (130) is located near the impellers (102, 103). The bearingless motor (110) and the radial magnetic bearing (130) control the radial position of the rotary shaft (101).

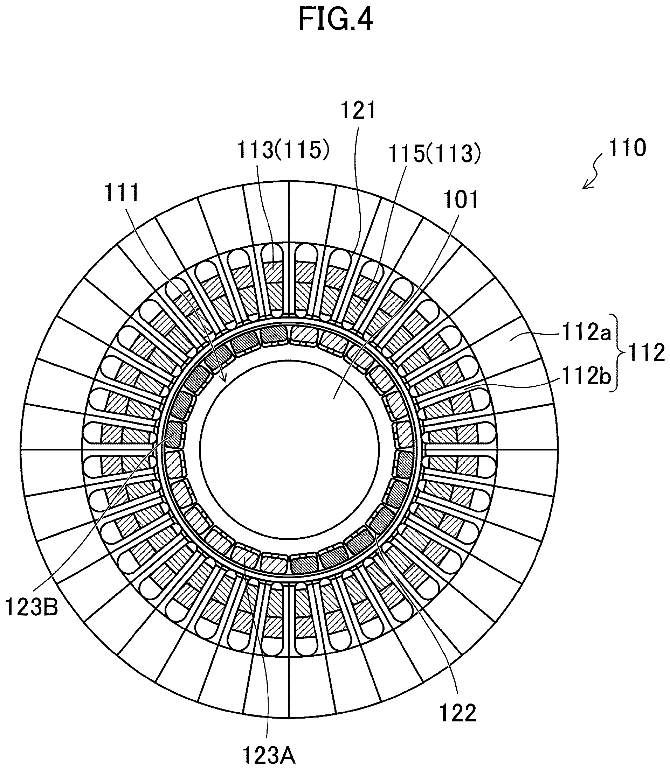

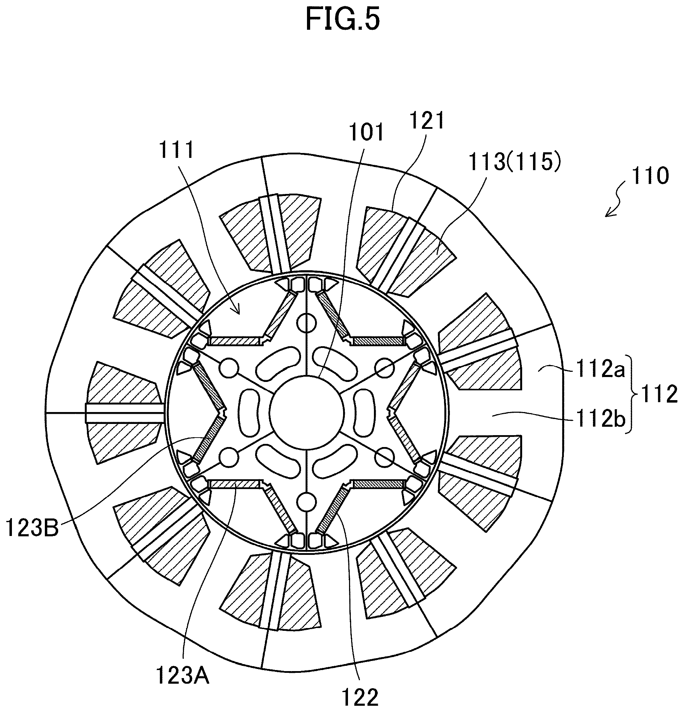

The bearingless motor (110) includes a rotor (111) and a stator (112). The rotor (111) is fixed to the rotary shaft (101). The stator (112) is provided radially outside the rotor (111) and is fixed to the inner circumferential wall of the pressure vessel (150). A plurality of permanent magnets (123A, 123B) (see FIGS. 4 and 5) are embedded in the core of the rotor (111). The stator (112) includes a plurality of teeth (112b) (see FIGS. 4 and 5), and a shaft support winding (113) and a motor winding (115) are wound around each of the teeth (112b). The shaft support force for supporting the rotary shaft (101) in a non-contact manner is generated by supplying electric power to the shaft support winding (113). The rotational torque for rotating the rotary shaft (101) is generated by supplying electric power to the motor winding (115). Each of the shaft support winding (113) and the motor winding (115) is a multi-phase winding having three or more phases (in this example, a three-phase winding having U-phase, V-phase, and W-phase).

The radial magnetic bearing (130) is fixed to the inner circumferential wall of the pressure vessel (150). The diameter of a magnetic body (131) disposed in the part of the rotary shaft (101) facing the radial magnetic bearing (130) may be larger than the diameters of the other parts. The radial magnetic bearing (130) includes a stator (132) having a plurality of teeth (not shown), and electromagnet coils (135) each wound around the respective teeth.

<Circuit of Bearingless Motor System>

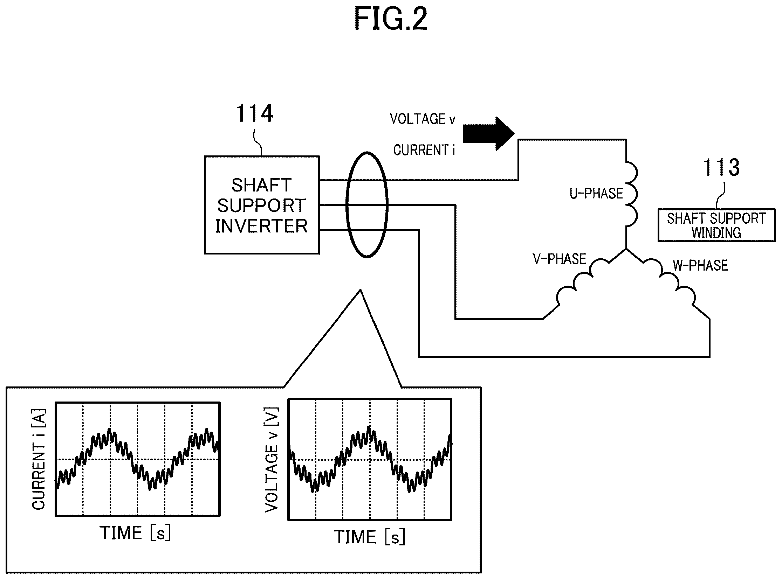

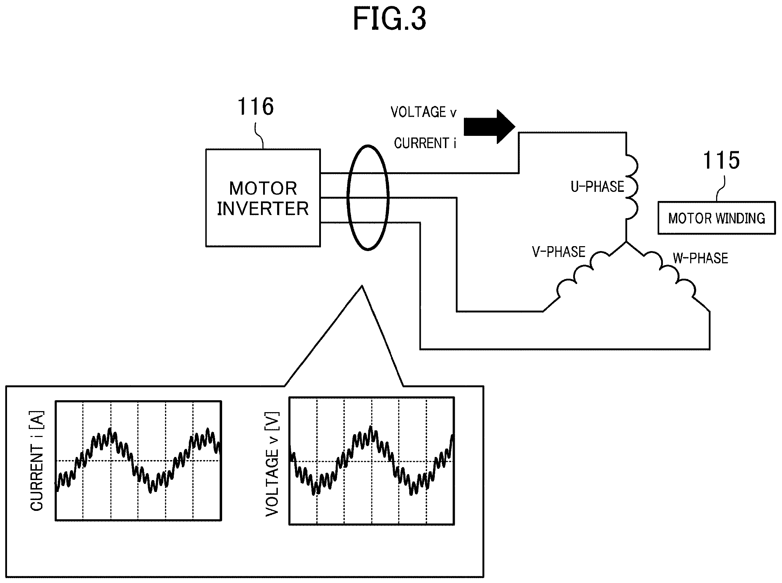

As shown in FIG. 2, the shaft support winding (113) of the bearingless motor (110) is supplied with electric power from the first inverter (114). As shown in FIG. 3, the motor winding (115) of the bearingless motor (110) is supplied with electric power from the second inverter (116). The inverters (114, 116) may be inverters of a pulse width modulation (PWM) type using switching elements, for example. The inverters (114, 116) are disposed outside the pressure vessel (150) and are connected to the windings (113, 115) via hermetic terminals that electrically connect the inside and outside of the pressure vessel (150). The inverters (114, 116) convert the input direct current to generate a three-phase alternating current to be supplied to the windings (113, 115).

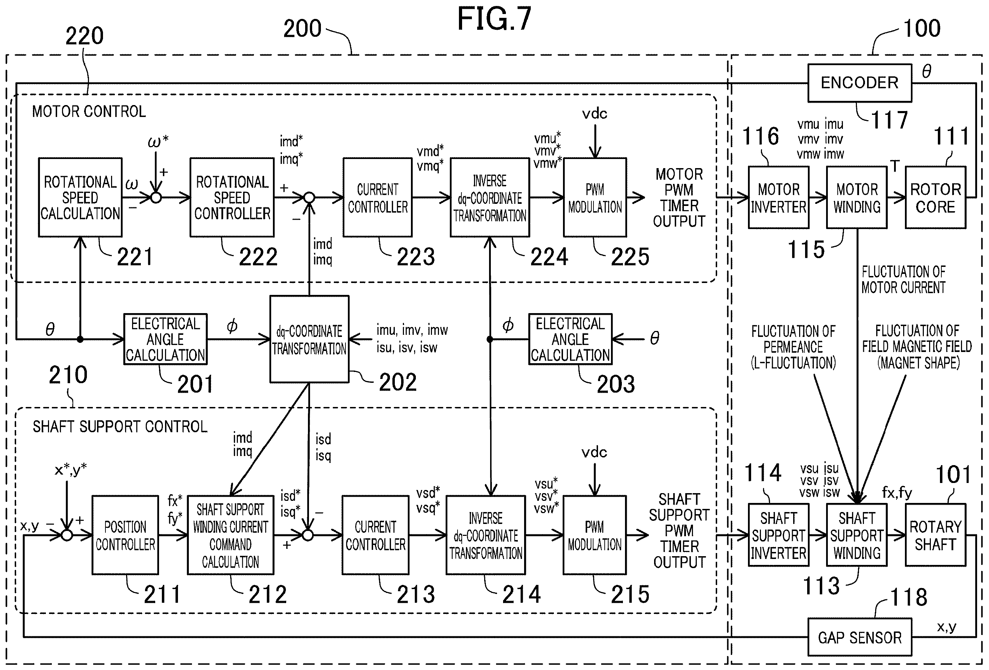

In the bearingless motor system (100) of this embodiment, the inverters (114, 116) are controlled by a control unit (200) (see FIG. 7). The control unit (200) commands one or both of the first inverter (114) and the second inverter (116) to output a voltage or a current on which a harmonic is superimposed in order to reduce the fluctuation in the shaft support force of the bearingless motor (110) (see FIGS. 2 and 3), where the harmonic is obtained by multiplication of the rotational frequency of the bearingless motor (110) by a natural number of two or more. The details of the inverter control by the control unit (200) will be described later.

The relationship $\varphi = \int \omega dt = \int 2\pi f dt$ holds between the rotational frequency f of the bearingless motor (110) and the electrical angle $\varphi$ of the rotor (111), where the electrical angle $\varphi$ is obtained by multiplication of the mechanical angle by the number of pole pairs of the motor. The electrical angle $\varphi$ is an angle obtained by multiplication of the mechanical rotational angle of the rotor (111) by the number of pole pairs of the bearingless motor (110), $\omega$ is an angular rotational speed (electrical angle) (= number of pole pairs of the motor $\times$ angular rotational speed (mechanical angle)), $\int dt$ is time integration, and $\pi$ is a circular constant.

<Structure of Bearingless Motor>

The type of the bearingless motor (110) is not limited, and the bearingless motor (110) may be, for example, a bearingless motor of a surface permanent magnet (SPM) type, a bearingless motor of an inset type, a bearingless motor of an interior permanent magnet (IPM) type, a bearingless motor of a buried permanent magnet (BPM) type, a bearingless motor of a consequent pole type, or the like. Alternatively, the bearingless motor (110) may be a bearingless motor of a synchronous reluctance type where a rotor does not include a magnet.

FIG. 4 shows an exemplary cross-sectional configuration of the bearingless motor (110) configured as a bearingless motor of a BPM type with four poles and 36 slots. In the configuration shown in FIG. 4, the stator (112) includes an annular back yoke (112a) and 36 teeth (112b) arranged in the circumferential direction of the back yoke (112a). Each tooth (112b) extends radially inward; 36 first slots (121) are provided, each surrounded by adjacent pairs of the teeth (112b) and the back yoke (112a); and in each first slot (121), the shaft support winding (113) and the motor winding (115) are disposed. The rotor (111) includes 24 second slots (122) arranged in the circumferential direction, and in each second slot (122), a permanent magnet (123A) of which the magnetic pole is N-pole or a permanent magnet (123B) of which the magnetic pole is S-pole is disposed. The permanent magnets (123A) of which the magnetic pole is N-pole and the permanent magnets (123B) of which the magnetic pole is S-pole are disposed in their respective six second slots (122) consecutive in the circumferential direction. That is, two pairs of the permanent magnets (123A) of which the magnetic pole is N-pole, each pair disposed in the six consecutive second slots (122), and two pairs of the permanent magnets (123B) of which the magnetic pole is S-pole, each pair disposed in the six consecutive second slots (122), are arranged alternately in the circumferential direction. Thus, in the bearingless motor (110) shown in FIG. 4, the number of pole pairs is two.

FIG. 5 illustrates an exemplary cross-sectional configuration of the bearingless motor (110) configured as a bearingless motor of an IPM type with six poles and nine slots. In the configuration shown in FIG. 5, the stator (112) includes an annular back yoke (112a) and nine teeth (112b) arranged in the circumferential direction of the back yoke (112a). Each tooth (112b) extends radially inward; nine first slots (121) are provided, each surrounded by adjacent pairs of the teeth (112b) and the back yoke (112a); and in each first slot (121), the shaft support winding (113) and the motor winding (115) are disposed. The rotor (111) includes six second slots (122) arranged in the circumferential direction, and in each second slot (122), two permanent magnets (123A) of which the magnetic pole is N-pole or two permanent magnets (123B) of which the magnetic pole is S-pole are provided apart from each other. That is, three pairs of the two adjacent permanent magnets (123A) of which the magnetic pole is N-pole and three pairs of the two adjacent permanent magnets (123B) of which the magnetic pole is S-pole are arranged alternately in the circumferential direction. Thus, in the bearingless motor (110) shown in FIG. 5, the number of pole pairs is three.

<Inverter Control>

The relationship between a shaft support force and a shaft support current in the bearingless motor is expressed by the following equation using a rotating coordinate system.

[Math 1]

$$\begin{bmatrix} F_x \\ F_y \end{bmatrix} = M \begin{bmatrix} i_{sd} \\ i_{sq} \end{bmatrix}$$

[Math 2]

$$M = \begin{bmatrix} M_{md} i_{md} & M_{mq} i_{mq} \\ M_{mq} i_{mq} & -M_{md} i_{md} \end{bmatrix}$$

Here, $F_x$ and $F_y$ are shaft support forces in the rotating coordinate system, $i_{sd}$ and $i_{sq}$ are shaft support currents, M is a matrix of correlation coefficients between the shaft support forces and the shaft support currents, $M_{md}$ and $M_{mq}$ are mutual inductances between the shaft support winding and the motor winding, and $i_{md}$ and $i_{mq}$ are motor currents.

In order to support the rotary shaft in a non-contact manner, the shaft support forces are required to be directly controlled in the stator coordinate system. For this purpose, as shown in the following equation, the shaft support forces $F_x$ and $F_y$ in the rotating coordinate system are rotationally transformed into shaft support forces $F_{x,\varphi}$ and $F_{y,\varphi}$ in the stator coordinate system.

[Math 3]

$$\begin{bmatrix} F_{x,\varphi} \\ F_{y,\varphi} \end{bmatrix} = \begin{bmatrix} \cos(-\varphi) & \sin(-\varphi) \\ -\sin(-\varphi) & \cos(-\varphi) \end{bmatrix} \begin{bmatrix} F_x \\ F_y \end{bmatrix}$$

Here, $\varphi$ is an electrical angle of the rotor (an angle obtained by multiplication of the mechanical rotational angle of the rotor by the number of pole pairs of the motor).

On the assumption that the relationship between the shaft support forces $F_x$ and $F_y$ and the shaft support currents $i_{sd}$ and $i_{sq}$ in the rotating coordinate system does not depend on the rotational angle (the electrical angle $\varphi$) of the rotor, inverter control is typically performed to obtain desired shaft support forces $F_{x,\varphi}$ and $F_{y,\varphi}$. However, this does not lead to sufficient reduction in the radial vibration of the rotary shaft.

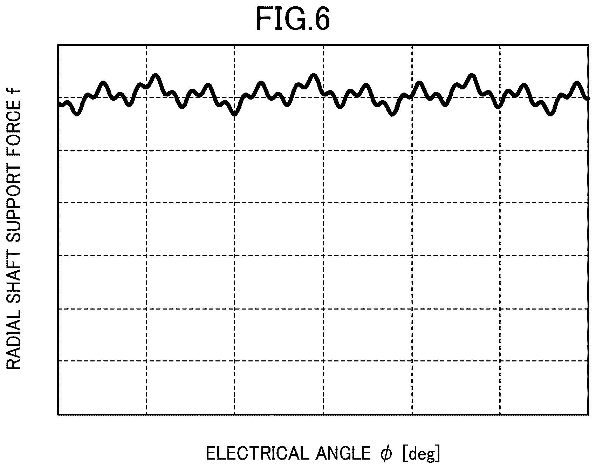

The inventors of the present application have studied the cause of the above problem and have found the following: the magnitude of the mutual inductance between the shaft support winding and the motor winding fluctuates depending on the rotational angle (the electrical angle $\varphi$) of the rotor due to the spatial harmonic determined by the characteristics of the magnetic circuit of the bearingless motor, and this results in unintentional fluctuation in the shaft support force depending on the rotational angle (the electrical angle $\varphi$) of the rotor as shown in FIG. 6.

The spatial harmonic determined by the characteristics of the magnetic circuit of the bearingless motor is caused by the following factors.

(1) Shape of Slot of Stator and Shape of Slot of Rotor
The slot, which is comprised of air, copper wires, and magnets, has a low magnetic permeability and a high magnetic resistance, and thus the magnetic flux is less likely to pass therethrough. Accordingly, a harmonic component associated with the number of slots of the stator and the rotor is generated.
(2) Shape of Magnet of Bearingless Motor
If one magnetic pole of the rotor is configured by a plurality of magnets, the magnetic force (the magnetomotive force) is weakened in the area where the magnets are partitioned from each other, and thus a harmonic component associated with the number of magnets (the number of divisions) is generated in each magnetic pole.
(3) Number of Pole Pairs of Bearingless Motor
A harmonic component is generated according to how many cycles the rotor electrically rotates when mechanically rotating once. For example, in a bearingless motor with two pole pairs, the rotor electrically rotates two cycles when mechanically rotating once.

Based on the above findings, the inventors of the present application have arrived at the following invention: in order to reduce the fluctuation in the shaft support force, i.e., in order to reduce the influence of the spatial harmonic determined by the characteristics of the magnetic circuit of the bearingless motor (110), one or both of the first inverter (114) for supplying the electric power to the shaft support winding (113) and the second inverter (116) for supplying the electric power to the motor winding (115) is/are commanded to output a voltage or a current on which a harmonic is superimposed, where the harmonic is obtained by multiplication of the rotational frequency of the bearingless motor (110) by a natural number of two or more. Accordingly, independently from the electrical angle, a desired shaft support force can be generated. Thus, the vibration of the rotary shaft (101) in the radial direction can be reduced, and the rotary shaft (101) can be rotated smoothly.

The harmonic component (the degree) with a frequency obtained by multiplication of the rotational frequency of the bearingless motor (110) by a natural number is determined by one of or combination of two or more of the following factors according to the characteristics of the magnetic circuit of the bearingless motor (110):

(1) a harmonic component multiplied by the number of stator slots (first slots (121)) through which the bearingless motor (110) passes when electrically rotating one cycle;
(2) a harmonic component multiplied by the number of rotor slots (second slots (122)) through which the bearingless motor (110) passes when electrically rotating one cycle;
(3) a harmonic component multiplied by the number of permanent magnets (permanent magnets (123A) of which the magnetic pole is N-pole and permanent magnets (123B) of which the magnetic pole is S-pole) constituting one magnetic pole of the rotor (111); and
(4) a harmonic component multiplied by the number of pole pairs of the bearingless motor (110).

The number of stator slots (first slots (121)) through which the bearingless motor (110) passes when electrically rotating one cycle is equal to the value obtained by division of the number of first slots (121) by the number of pole pairs of the bearingless motor (110). The number of rotor slots (second slots (122)) through which the bearingless motor (110) passes when electrically rotating one cycle is equal to the value obtained by division of the number of second slots (122) by the number of pole pairs of the bearingless motor (110).

For example, for a bearingless motor (of a BPM type) with four poles and 36 slots shown in FIG. 4, the harmonic component (the degree) superimposed on a voltage or a current output from the inverter serving for shaft support or motor drive is determined as follows.

(1) The harmonic component multiplied by the number of stator slots through which the bearingless motor passes when electrically rotating one cycle is of the eighteenth degree because the bearingless motor passes through eighteen stator slots when the rotor mechanically rotates by 180° in consideration that the number of poles is four. This degree is equal to the number obtained by division of the number of stator slots (36 stator slots) by two which is the number of pole pairs of the bearingless motor.
(2) The harmonic component multiplied by the number of rotor slots through which the bearingless motor passes when electrically rotating one cycle is of the twelfth degree because the bearingless motor passes through twelve rotor slots when the rotor mechanically rotates by 180° in consideration that the number of poles is four. This degree is equal to the number obtained by division of the number of rotor slots (24 rotor slots) by two which is the number of pole pairs of the bearingless motor.
(3) The harmonic component multiplied by the number of permanent magnets (permanent magnets of which the magnetic pole is N-pole and permanent magnets of which the magnetic pole is S-pole) constituting one magnetic pole of the rotor is of the sixth degree because each of N-pole and S-pole is comprised of six magnets.
(4) The harmonic component multiplied by the number of pole pairs of the bearingless motor is of the second degree because the number of pole pairs is two.

In view of the foregoing, for a bearingless motor (of a BPM type) with four poles and 36 slots shown in FIG. 4, the second, sixth, twelfth, and eighteenth harmonic components of the rotational frequency of the bearingless motor may be superimposed on a voltage or a current output from the inverter serving for shaft support or motor drive in order to reduce the fluctuation in the shaft support force.

Further, for example, for a bearingless motor (of a IPM type) with six poles and nine slots shown in FIG. 5, the harmonic component (the degree) superimposed on a voltage or a current output from the inverter serving for shaft support or motor drive is determined as follows.

(1) The harmonic component multiplied by the number of stator slots through which the bearingless motor passes when electrically rotating one cycle is of the third degree because the bearingless motor passes through three stator slots when the rotor mechanically rotates by 120° in consideration that the number of poles is six. This degree is equal to the number obtained by division of the number of stator slots (nine stator slots) by three which is the number of pole pairs of the bearingless motor.
(2) The harmonic component multiplied by the number of rotor slots through which the bearingless motor passes when electrically rotating one cycle is of the second degree because the bearingless motor passes through two rotor slots when the rotor mechanically rotates by 120° in consideration that the number of poles is six. This degree is equal to the number obtained by division of the number of rotor slots (six rotor slots) by three which is the number of pole pairs of the bearingless motor.

(3) The harmonic component multiplied by the number of permanent magnets (permanent magnets of which the magnetic pole is N-pole and permanent magnets of which the magnetic pole is S-pole) constituting one magnetic pole of the rotor is of the second degree because each of N-pole and S-pole is comprised of two magnets.

(4) The harmonic component multiplied by the number of pole pairs of the bearingless motor is of the third degree because the number of pole pairs is three.

In view of the foregoing, for a bearingless motor (of a IPM type) with six poles and nine slots shown in FIG. 5, the second and third harmonic components of the rotational frequency of the bearingless motor may be superimposed on a voltage or a current output from the inverter serving for shaft support or motor drive in order to reduce the fluctuation in the shaft support force.

Now, an example of the following case will be described in detail: in order to command one or both of the first inverter (114) for shaft support and the second inverter (116) for motor drive to output a voltage or a current on which the harmonic obtained by multiplication of the rotational frequency of the bearingless motor (110) by a natural number of two or more is superimposed, the control unit (200) adds a correction signal to a control signal of one or both of the first inverter (114) and the second inverter (116). Note that the technique of the present invention is not limited thereto. For example, the configuration of the control unit (200) itself may be changed: specifically, the control unit (200) may use a machine learning model, or the control unit (200) may change a control gain according to the electrical angle of the rotor (111) or the like, in order to command one or both of the first inverter (114) and the second inverter (116) to output a voltage or a current on which the harmonic obtained by multiplication of the rotational frequency of the bearingless motor (110) by a natural number of two or more is superimposed.

<Correction of Inverter Control Signal>

As shown in FIG. 7, the control unit (200) of the bearingless motor system (100) of this embodiment includes, as main components, a shaft support control unit (210) and a motor control unit (220). The control unit (200) includes, for example, a processor and a memory that stores programs and information for operating the processor.

The shaft support control unit (210) controls the first inverter (114) serving for shaft support. Accordingly, the first inverter (114) supplies shaft support winding three-phase voltages (vsu, vsv, vsw) and shaft support winding three-phase currents (isu, isv, isw) to the shaft support winding (113), and the shaft support forces $f_x$ and $f_y$ are applied from the shaft support winding (113) to the rotary shaft (101). At this time, the radial position (x, y) of the rotary shaft (101) is measured by a gap sensor (118). The shaft support forces $f_x$ and $f_y$ generated by the shaft support winding (113) are influenced by the fluctuation in permeance (the L-fluctuation), the fluctuation in a field magnetic field, and the fluctuation in a motor current flowing through the motor winding (115).

The motor control unit (220) controls the second inverter (116) serving for motor drive. Accordingly, the second inverter (116) supplies motor winding three-phase voltages (vmu, vmv, vmw) and motor winding three-phase currents (imu, imv, imw) to the motor winding (115), and the rotational torque T is applied from the motor winding (115) to the rotor (111). At this time, the mechanical rotational angle $\theta$ of the rotor (111) is measured by an encoder (117).

In this example, the shaft support control unit (210) and the motor control unit (220) control the first inverter (114) and the second inverter (116), respectively, using pulse width modulation (PWM). Specifically, the inverters (114, 116) are capable of outputting pulses with modulated ratios (duty ratios) of a period of H-level output and a period of L-level output in a certain constant cycle, and the shaft support control unit (210) and the motor control unit (220) modulate settings of the duty ratio to control a voltage and a current output from the inverters (114, 116).

In this example, the shaft support control unit (210) includes a position controller (211), a shaft support winding current command calculation unit (212), a current controller (213), an inverse dq-coordinate transformation unit (214), and a PWM modulation unit (215).

By applying a PID calculation to a position deviation value obtained by subtraction of measured values (x, y) of a radial position from a radial position command values (x*, y*) set in advance, the position controller (211) calculates shaft support force command values ($f_x^*$, $f_y^*$) for stably levitating the rotary shaft (101).

Based on the shaft support force command values ($f_x^*$, $f_y^*$), the shaft support winding current command calculation unit (212) calculates shaft support winding current command values (isd*, isq*). At this time, as described above, the relationship between the shaft support force and the shaft support winding current varies with the motor winding current, and thus the shaft support winding current command values (isd*, isq*) is calculated in consideration of motor winding current detection values (imd, imq). The motor winding current detection value (imd, imq) is input from a dq-coordinate transformation unit (202) to the shaft support winding current command calculation unit (212). Based on the electrical angle $\varphi$ of the rotor (111), the dq-coordinate transformation unit (202) transforms motor winding three-phase current detection values (imu, imv, imw) into motor winding current detection values (imd, imq) in the rotating coordinate system. The electrical angle $\varphi$ of the rotor (111) is input from an electrical angle calculation unit (201) to the dq-coordinate transformation unit (202). The electrical angle calculation unit (201) calculates the electrical angle φ of the rotor (111) by multiplying the measured value of the mechanical rotational angle θ of the rotor (111) by the number of pole pairs of the bearingless motor (110).

By applying a PI operation to current deviation values obtained by subtraction of the shaft support winding current detection values (isd, isq) from the shaft support winding current command values (isd*, isq*), the current controller (213) calculates shaft support winding voltage command values (vsd*, vsq*) that are to be applied to the shaft support winding (113) to adjust the shaft support winding current to the shaft support winding current command values (isd*, isq*). The shaft support winding current detection values (isd, isq) are input from the dq-coordinate transformation unit (202) to the current controller (213). The dq-coordinate transformation unit (202) transforms the shaft support winding three-phase current detection values (isu, isv, isw) into the shaft support winding current detection values (isd, isq) in the rotating coordinate system based on the electrical angle φ of the rotor (111). The electrical angle φ of the rotor (111) is input from the electrical angle calculation unit (201) to the dq-coordinate transformation unit (202). The electrical angle calculation unit (201) calculates the electrical angle φ of the rotor (111) by multiplying the measured value of the mechanical rotational angle θ of the rotor (111) by the number of pole pairs of the bearingless motor (110).

Based on the electrical angle φ of the rotor (111), the inverse dq-coordinate transformation unit (214) transforms the shaft support winding voltage command values (vsd*, vsq*) in the rotating coordinate system into shaft support winding three-phase voltage command values (vsu*, vsv*, vsw*). The electrical angle φ of the rotor (111) is input from an electrical angle calculation unit (203) to the inverse dq-coordinate transformation unit (214). The electrical angle calculation unit (203) calculates the electrical angle φ of the rotor (111) by multiplying the measured value of the mechanical rotational angle θ of the rotor (111) by the number of pole pairs of the bearingless motor (110).

The PWM modulation unit (215) calculates a PWM comparison value (a duty ratio) from the ratio between the shaft support winding three-phase voltage command values (vsu*, vsv*, vsw*) and the main circuit (power source) voltage detection value (vdc) so that the average value of the shaft support winding three-phase voltages (voltages between windings) (vsu, vsv, vsw) becomes equal to the shaft support winding three-phase voltage command values (vsu*, vsv*, vsw*). Then, the PWM modulation unit (215) inputs the above PWM comparison value as a shaft support PWM timer output (a control signal) to the first inverter (114) serving for shaft support.

In this example, the motor control unit (220) includes a rotational speed calculation unit (221), a rotational speed controller (222), a current controller (223), an inverse dq-coordinate transformation unit (224), and a PWM modulation unit (225).

The rotational speed calculation unit (221) detects the angular rotational speed (ω) of the bearingless motor (110) (the rotor (111)) from a temporal change in the measured value of the mechanical rotational angle θ of the rotor (111).

By applying a PID calculation to an angular rotational speed deviation value obtained by subtraction of the detected value (ω) of the angular rotational speed from the angular rotational speed command value (ω*) set in advance, the rotational speed controller (222) calculates motor winding current command values (imd*, imq*) for achieving a desired angular rotational speed.

By applying a PI operation to a current deviation value obtained by subtraction of the motor winding current detection value (imd, imq) from the motor winding current command values (imd*, imq*), the current controller (223) calculates motor winding voltage command values (vmd*, vmq*) that are to be applied to the motor winding (115) to adjust the motor winding currents to the motor winding current command values (imd*, imq*). The motor winding current detection value (imd, imq) are input from the dq-coordinate transformation unit (202) to the current controller (223). Based on the electrical angle φ of the rotor (111), the dq-coordinate transformation unit (202) transforms motor winding three-phase current detection values (imu, imv, imw) into motor winding current detection values (imd, imq) in the rotating coordinate system. The electrical angle φ of the rotor (111) is input from the electrical angle calculation unit (201) to the dq-coordinate transformation unit (202). The electrical angle calculation unit (201) calculates the electrical angle φ of the rotor (111) by multiplying the measured value of the mechanical rotational angle θ of the rotor (111) by the number of pole pairs of the bearingless motor (110).

Based on the electrical angle φ of the rotor (111), the inverse dq-coordinate transformation unit (224) transforms the motor winding voltage command values (vmd*, vmq*) in the rotating coordinate system into motor winding three-phase voltage command values (vmu*, vmv*, vmw*). The electrical angle φ of the rotor (111) is input from the electrical angle calculation unit (203) to the inverse dq-coordinate transformation unit (224). The electrical angle calculation unit (203) calculates the electrical angle φ of the rotor (111) by multiplying the measured value of the mechanical rotational angle θ of the rotor (111) by the number of pole pairs of the bearingless motor (110).

The PWM modulation unit (225) calculates a PWM comparison value (a duty ratio) from the ratio between the motor winding three-phase voltage command values (vmu*, vmv*, vmw*) and the main circuit (power source) voltage detection value (vdc) so that the average value of the motor winding three-phase voltages (voltages between windings) (vmu, vmv, vmw) becomes equal to the motor winding three-phase voltage command values (vmu*, vmv*, vmw*). Then, the PWM modulation unit (225) inputs the above PWM comparison value as a motor PWM timer output (a control signal) to the second inverter (116) serving for motor drive.

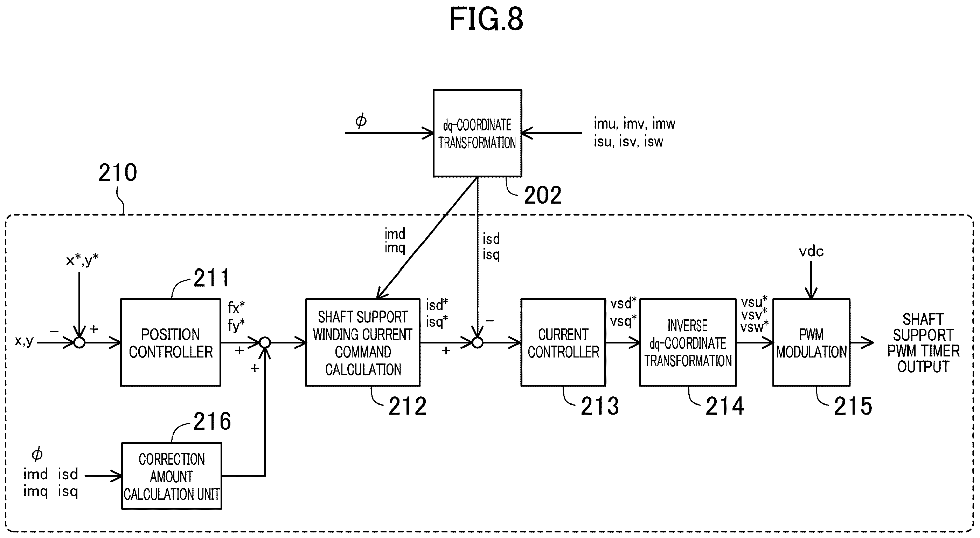

In this example, the shaft support control unit (210) is provided with a correction amount calculation unit (216) as shown in FIG. 8 so that the first inverter (114) serving for shaft support can output a voltage or a current on which a harmonic is superimposed, where the harmonic is obtained by multiplication of the rotational frequency of the bearingless motor (110) by a natural number of two or more.

In order to reduce the influence of the spatial harmonic determined by the characteristics of the magnetic circuit of the bearingless motor (110), the correction amount calculation unit (216) adds a correction signal to the shaft support force command values ($f_x^*$, $f_y^*$), which are control signals input from the position controller (211) to the shaft support winding current command calculation unit (212). The correction amount calculation unit (216) calculates a correction amount based on the electrical angle $\varphi$ of the rotor (111), the shaft support winding current detection value (isd, isq) in the rotating coordinate system, and the motor winding current detection value (imd, imq) in the rotating coordinate system, and then adds the above calculated correction amount as a correction signal to the shaft support force command values ($f_x^*$, $f_y^*$) as control signals in a feedforward manner.

The correction amount calculation unit (216) may calculate a correction amount using not the shaft support winding current detection values (isd, isq) detected by the current sensor but shaft support winding voltage detection values (vsd, vsq) detected by a voltage sensor, shaft support force detection values ($f_x$, $f_y$) detected by a force sensor, or a radial position detection value of the rotary shaft (101) detected by a gap sensor. In addition, the motor winding current detection value (imd, imq) may be replaced with motor winding voltage detection values (vmd, vmq) detected by a voltage sensor or a rotational torque detection value (T) of the rotor (111) detected by a torque meter. The details of the correction amount calculation will be described later.

In the example shown in FIG. 8, a correction signal is added to the control signal input from the position controller (211) to the shaft support winding current command calculation unit (212) (the shaft support force command values ($f_x^*$ and $f_y^*$)). Instead, a correction signal may be added to the following control signals: a control signal input from the shaft support winding current command calculation unit (212) to the current controller (213) (the shaft support winding current command values (isd*, isq*)); a control signal input from the current controller (213) to the inverse dq-coordinate transformation unit (214) (the shaft support winding voltage command values (vsd*, vsq*)) (before inverse dq-coordinate transformation); a control signal input from the inverse dq-coordinate transformation unit (214) to the PWM modulation unit (215) (the shaft support winding three-phase voltage command values (vsu*, vsv*, vsw*)) (after inverse dq-coordinate transformation); or a control signal input to the position controller (211) (the radial position command values (x*, y*)).

Alternatively, instead of a correction signal being added to a control signal of the first inverter (114) serving for shaft support, a correction signal may be added to a control signal of the second inverter (116) serving for motor drive. Specifically, a correction signal may be added to the following control signals: a control signal input from the rotational speed controller (222) to the current controller (223) (the motor winding current command values (imd*, imq*)); a control signal input from the current controller (223) to the inverse dq-coordinate transformation unit (224) (the motor winding voltage command values (vmd*, vmq*)) (before inverse dq-coordinate transformation); or a control signal input from the inverse dq-coordinate transformation unit (224) to the PWM modulation unit (225) (the motor winding three-phase voltage command values (vmu*, vmv*, vmw*)) (after inverse dq-coordinate transformation).

In the bearingless motor, a motor torque and a shaft support force are generated by a common magnetic circuit, and thus both a current value of the shaft support winding and a current value of the motor winding influence the shaft support force. Thus, a correction signal for reducing the fluctuation in the shaft support force can be added only to a control signal of the inverter serving for motor drive. In other words, whichever of a control signal of the inverter serving for shaft support and a control signal of the inverter serving for motor drive is corrected, the magnitude of the output shaft support force can be corrected. Accordingly, in order to reduce the fluctuation in the shaft support force, any of the following ways can be employed depending on the situation: (1) correcting only a control signal of the inverter serving for shaft support; (2) correcting only a control signal of the inverter serving for motor drive; and (3) correcting control signals of both the inverter serving for shaft support and the inverter serving for motor drive.

<Correction Amount Calculation>

With a correction amount of a control signal being prepared as table data in advance for each value of the electrical angle $\varphi$ of the rotor (111), the shaft support winding currents (isd, isq) in the rotating coordinate system, and the motor winding currents (imd, imq) in the rotating coordinate system, the correction amount calculation unit (216) may use this table data to calculate a correction amount based on each detection value of the electrical angle $\varphi$ of the rotor (111), the shaft support winding currents (isd, isq) in the rotating coordinate system, and the motor winding currents (imd, imq) in the rotating coordinate system. The table data may be stored in a memory of the control unit (200).

The table data may be created by magnetic field analysis being performed in advance based on design information on the bearingless motor, for example. In this method, an analysis model for magnetic field analysis is created from a drawing of the bearingless motor; the magnetic field analysis is performed under various conditions with variation in the shaft support winding current and the motor winding current; a waveform of the shaft support force acting in a radial direction is obtained; from the waveform, a correction amount for reducing the fluctuation in the shaft support force is calculated for each value of the rotational angle (the electrical angle) of the rotor, the motor winding current, and the shaft support winding current; and then the correction amounts are brought together as table data.

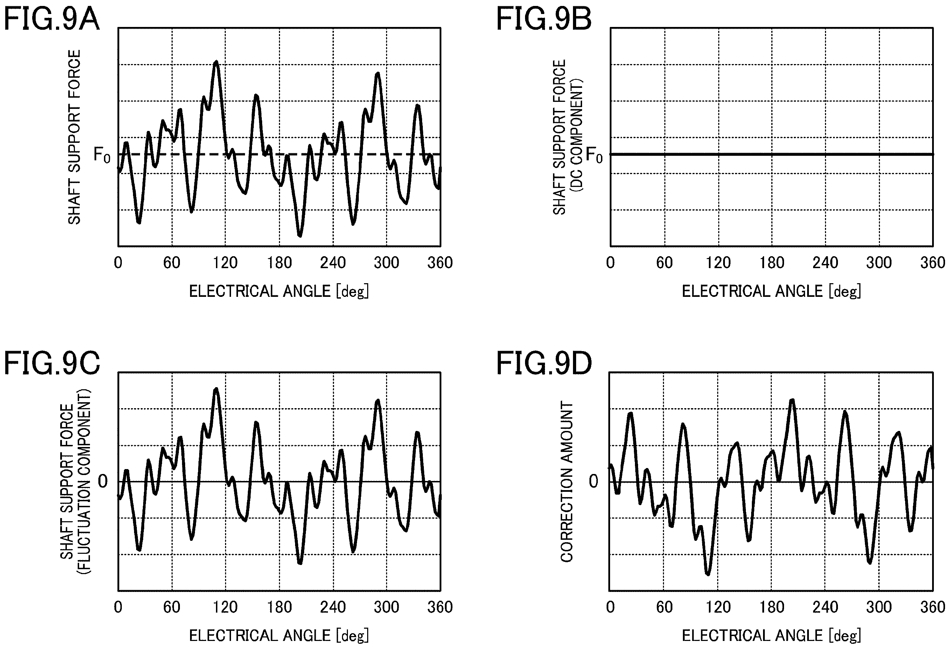

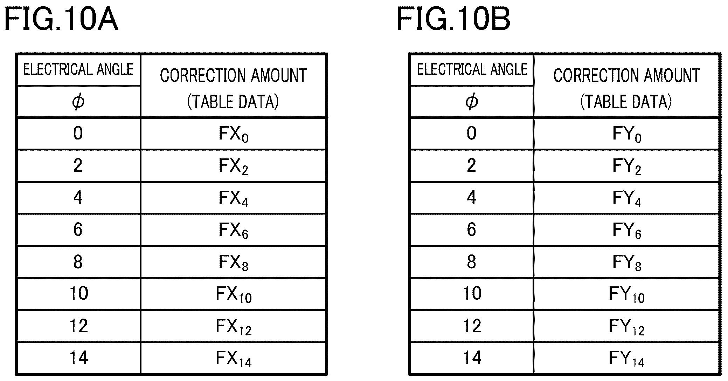

Specifically, magnetic field analysis is performed with any motor winding currents (imd1, imq1) and any shaft support winding currents (isd1, isq1) as input currents, and then a shaft support force in the radial direction is obtained for each electrical angle $\varphi$ of the rotor (see FIG. 9A). Next, an obtained waveform of the shaft support force in the radial direction is divided into a DC component (see FIG. 9B) and a fluctuation component (FIG. 9C). Next, by inversion (multiplication by -1) of the fluctuation component waveform of the shaft support force waveform in the radial direction, a correction amount for each electrical angle $\varphi$ of the rotor is calculated (see FIG. 9D), and then based on a waveform of the correction amount, table data as schematically shown in FIG. 10A and FIG. 10B is created. Similarly, magnetic field analysis is performed with various motor winding currents ((imd2, imq2), (imd3, imq3), etc.) and shaft support winding currents ((isd2, isq2), (isd3, isq3), etc.) as input currents, and then table data is created in the above-described procedure. FIG. 10A shows the correction amount for each electrical angle $\varphi$ of the rotor where the motor winding currents are imd1 and imq1 and the shaft support winding currents are isd1 and isq1. FIG. 10B shows the correction amount for each electrical angle $\varphi$ of the rotor where the motor winding currents are imd2 and imq2 and the shaft support winding currents are isd2 and isq2. The table data shown in FIG. 10A and FIG. 10B contains the correction amounts shown schematically in letters, but in practice, the table data will contain numerical values calculated as described above.

From the table data shown in FIG. 10A and FIG. 10B, it can be found that, for example, when the motor winding current detection values are imd1 [A] and imq1 [A], the shaft support winding current detection value are isd1 [A] and isq1 [A], and the rotor electrical angle detection value is 4 [deg], the correction signal (the correction amount) to be added to a shaft support force command value, which is a control signal input from the position controller (211) to the shaft support winding current command calculation unit (212), is $FX_4$ [N]. In this case, with the correction amount of the shaft support force in the radial direction being decomposed into the x direction and the y direction, the correction amounts $\Delta f_x^*$ and $\Delta f_y^*$ to be added to the shaft support force command values $f_x^*$ and $f_y^*$ are represented by $\Delta f_x^* = FX_4\cos\varphi$ and $\Delta f_y^* = FX_4\sin\varphi$, respectively. In the table data shown in FIG. 10A and FIG. 10B, the correction amounts for the electrical angles up to 14 [deg] are registered, but in the table data in practice, the correction amounts for the electrical angles up to 360 [deg] are registered.

Alternatively, another method may be employed as follows: for example, a mathematical expression for calculating a correction signal based on the characteristics of the magnetic circuit of the bearingless motor is constructed, and then table data on the gain and phase of a harmonic component in the mathematical expression is created from operation information (calibration) of an actual machine. In this method, first of all, based on the characteristics of the magnetic circuit of the bearingless motor, the degree of a harmonic component of a correction signal to be added to a control signal of the inverter is determined. Next, the amplitude and phase of the harmonic component having each determined degree are determined using the operation information (calibration) of the actual machine. Specifically, the actual machine is operated with variation in the rotational angle (electrical angle) of the rotor, the shaft support winding current, and the motor winding current; and the amplitude and phase of the harmonic component to be superimposed on the control signal are determined so that the amount of fluctuation in the shaft support force decreases under each operating condition. Next, the amplitude and phase of the harmonic component determined for each value of the rotational angle (electrical angle) of the rotor, the motor winding current, and the shaft support winding current are brought together as table data.

The number of harmonic components to be superimposed depends on the characteristics of the magnetic circuit of the bearingless motor. For example, when one harmonic component is superimposed, the correction signal X ($\varphi$) is expressed as follows as a function of the electrical angle $\varphi$.

[Math 4]

$$X(\varphi) = X_k\left(i_{md}, i_{mq}, i_{sd}, i_{sq}\right) \cos\left\{k\varphi + \gamma_k\left(i_{md}, i_{mq}, i_{sd}, i_{sq}\right)\right\}$$

Note that k represents the degree of the harmonic component, and $X_k$ and $\gamma_k$ represent the amplitude and phase of the harmonic component, respectively. As described above, $X_k$ and $\gamma_k$ are determined by calibration. Further, $i_{md}$ and $i_{mq}$ represent motor winding currents in the rotating coordinate system, and $i_{sd}$ and $i_{sq}$ represent shaft support winding currents in the rotating coordinate system.

For example, for a bearingless motor (of a BPM type) with four poles and 36 slots shown in FIG. 4, in consideration of the characteristics of the magnetic circuit, the second, sixth, twelfth, and eighteenth harmonic components of which the correction signal X ($\varphi$) is expressed by the following equation may be added to the shaft support force command values ($f_x^*$, $f_y^*$) as control signals input to the shaft support winding current command calculation unit (212).

[Math 5]

$$X(\varphi) = X_2\big(i_{md}, i_{mq}, i_{sd}, i_{sq}\big) \cos\{2\varphi + \gamma_2\big(i_{md}, i_{mq}, i_{sd}, i_{sq}\big)\} + X_6\big(i_{md}, i_{mq}, i_{sd}, i_{sq}\big) \cos\{6\varphi + \gamma_6\big(i_{md}, i_{mq}, i_{sd}, i_{sq}\big)\} +$$
$$X_{12}\big(i_{md}, i_{mq}, i_{sd}, i_{sq}\big) \cos\{12\varphi + \gamma_{12}\big(i_{md}, i_{mq}, i_{sd}, i_{sq}\big)\} + X_{18}\big(i_{md}, i_{mq}, i_{sd}, i_{sq}\big) \cos\{18\varphi + \gamma_{18}\big(i_{md}, i_{mq}, i_{sd}, i_{sq}\big)\}$$

Here, $X_2$ ($i_{md}$, $i_{mq}$, $i_{sd}$, $i_{sq}$), $X_6$ ($i_{md}$, $i_{mq}$, $i_{sd}$, $i_{sq}$), $X_{12}$ ($i_{md}$, $i_{mq}$, $i_{sd}$, $i_{sq}$), and $X_{18}$ ($i_{md}$, $i_{mq}$, $i_{sd}$, $i_{sq}$) are the amplitudes of the harmonic components of the respective degrees, and vary with the motor winding current and the shaft support winding current. $\gamma_2$ ($i_{md}$, $i_{mq}$, $i_{sd}$, $i_{sq}$), $\gamma_6$ ($i_{md}$, $i_{mq}$, $i_{sd}$, $i_{sq}$), $\gamma_{12}$ ($i_{md}$, $i_{mq}$, $i_{sd}$, $i_{sq}$), and $\gamma_{18}$ ($i_{md}$, $i_{mq}$, $i_{sd}$, $i_{sq}$) are the phases of the harmonic components of the respective degrees, and vary with the motor winding current and the shaft support winding current.

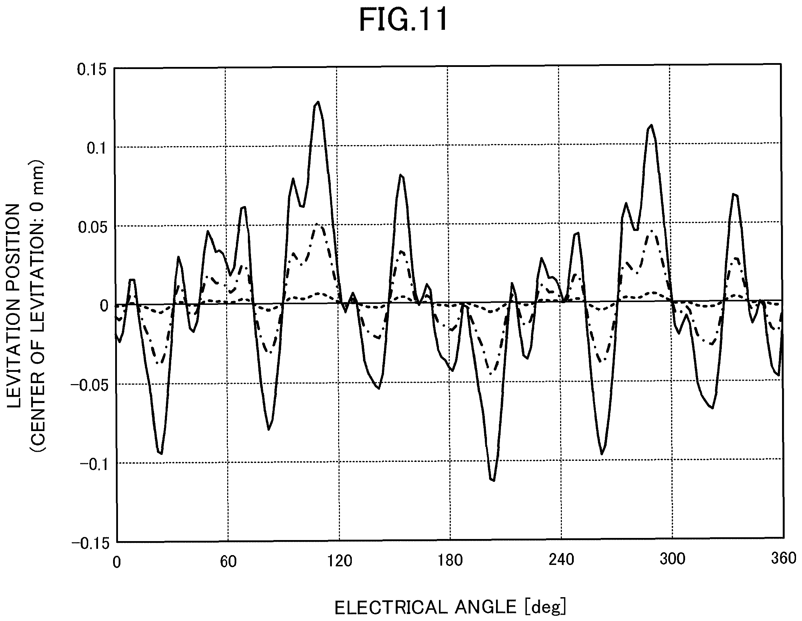

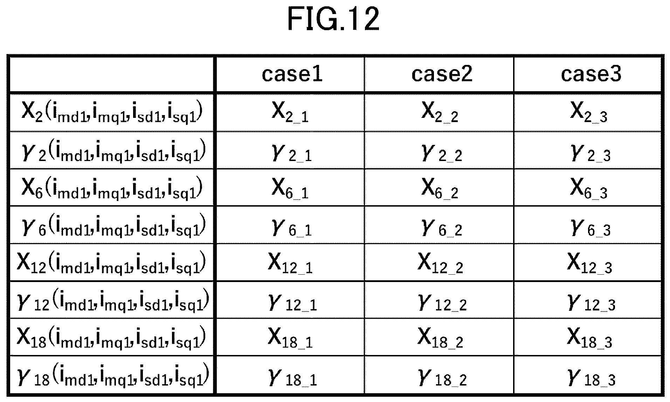

The amplitude and phase of the harmonic component of each degree may be specifically determined as follows. First, variables in the program (microcomputer software) of the control unit (200) are enabled to be transformed from digital to analog and then be output, and then the control signal of the shaft support force command values ($f_x$*, $f_y$*) and the gap sensor detection signal of the radial position (the levitating position) (x, y) of the rotary shaft (101) are enabled to be output. Next, with variation in the motor winding current and the shaft support winding current, the operation of the actual machine is started, and then, at any motor winding currents (imd1, imq1) and any shaft support winding currents (isd1, isq1), the amplitude and phase of the harmonic component of each degree of the correction signal are changed. At this time, the levitating position detection waveform is checked, and the amplitude and phase of the harmonic component of each degree of the correction signal for reducing the fluctuation in the levitating position detection waveform are determined. FIG. 11 schematically shows a waveform of the levitating position produced when the amplitude and phase of the harmonic component of the correction signal to be added to the control signal are changed. In the example shown in FIG. 11, among case 1 of a solid line, case 2 of a one dot chain line, and case 3 of a broken line, the levitating position waveform of case 3 has the smallest fluctuation, and thus the amplitude and phase of the harmonic component of case 3 are registered in the table data. FIG. 12 shows the amplitudes and phases of the harmonic components of the respective degrees in cases 1 to 3: $X_2$ ($i_{md}$, $i_{mq}$, $i_{sd}$, $i_{sq}$), $\gamma_2$ ($i_{md}$, $i_{mq}$, $i_{sd}$, $i_{sq}$), $X_6$ ($i_{md}$, $i_{mq}$, $i_{sd}$, $i_{sq}$), $\gamma6$ ($i_{md}$, $i_{mq}$, $i_{sd}$, $i_{sq}$), $X_{12}$ ($i_{md}$, $i_{mq}$, $i_{sd}$, $i_{sq}$), $\gamma_{12}$ ($i_{md}$, $i_{mq}$, $i_{sd}$, $i_{sq}$), $X_{18}$ ($i_{md}$, $i_{mq}$, $i_{sd}$, $i_{sq}$), and $\gamma_{18}$ ($i_{md}$, $i_{mq}$, $i_{sd}$, $i_{sq}$). FIG. 12 shows the amplitudes and phases schematically in letters, but in practice, the numerical values set as correction signals when the actual machine is operated are provided.

Similarly, also for various motor winding currents ((imd2, imq2), (imd3, imq3), etc.) and shaft support winding currents ((isd2, isq2), (isd3, isq3), etc.), the amplitude and phase of the harmonic component of each degree of the correction signal for reducing the fluctuation in the levitating position waveform are determined. In this manner, for each value of the motor winding currents and the shaft support winding currents, the amplitude and phase of the harmonic component of each degree of the correction signal for reducing the fluctuation in the levitating position waveform are brought together as table data.

<Example of Voltage Calculation>

If, in the control unit (200), no correction signal is added to the inverter control signal, the control signal has only a fundamental wave (only a frequency of one time the angular rotational speed), and for example, the three-phase voltages ($v_u$, $v_y$, $v_w$) are expressed as follows, where the power source voltage is $V_m$ and the electrical angle is $\varphi$. The following description also applies to the shaft support winding (113) and the motor winding (115), and the same also applies to the three-phase current.

[Math 6]

$$v_u = V_m \sin \varphi$$

$$v_v = V_m \sin \left( \varphi + \frac{2}{3} \pi \right)$$

$$v_w = V_m \sin \left( \varphi - \frac{2}{3} \pi \right)$$

A dq-axis transformation matrix Z for transforming the three-phase voltages into dq-axis voltages in the rotating coordinate system is expressed as follows.

[Math 7]

$$Z = \sqrt{\frac{2}{3}} \begin{pmatrix} \cos\varphi & \cos\left(\varphi + \frac{2}{3}\pi\right) & \cos\left(\varphi - \frac{2}{3}\pi\right) \\ \sin\varphi & \sin\left(\varphi + \frac{2}{3}\pi\right) & \sin\left(\varphi - \frac{2}{3}\pi\right) \end{pmatrix}$$

Using the dq-axis transformation matrix Z, the three-phase (UVW phase) voltages ($v_u$, $v_y$, $v_w$) are transformed into dq-axis voltages ($v_d$, $v_q$) as follows.

[Math 8]

$$\begin{pmatrix} v_d \\ v_q \end{pmatrix} = Z \begin{pmatrix} v_u \\ v_v \\ v_w \end{pmatrix}$$

$$= \sqrt{\frac{2}{3}} \begin{pmatrix} \cos\varphi & \cos\left(\varphi + \frac{2}{3}\pi\right) & \cos\left(\varphi - \frac{2}{3}\pi\right) \\ \sin\varphi & \sin\left(\varphi + \frac{2}{3}\pi\right) & \sin\left(\varphi - \frac{2}{3}\pi\right) \end{pmatrix} \begin{pmatrix} V_m \sin\varphi \\ V_m \sin\left(\varphi + \frac{2}{3}\pi\right) \\ V_m \sin\left(\varphi - \frac{2}{3}\pi\right) \end{pmatrix}$$

Accordingly, the d-axis voltage $v_q$ is calculated as follows.

[Math 9]

$$v_d = V_m \sin\varphi \times \sqrt{\frac{2}{3}}\cos\varphi + V_m \sin\left(\varphi + \frac{2}{3}\pi\right) \times \sqrt{\frac{2}{3}}\cos\left(\varphi + \frac{2}{3}\pi\right) + V_m \sin\left(\varphi - \frac{2}{3}\pi\right) \times \sqrt{\frac{2}{3}}\cos\left(\varphi - \frac{2}{3}\pi\right)$$

$$= V_m \sin\varphi \cos\varphi + V_m \sin\left(\varphi + \frac{2}{3}\pi\right)\cos\left(\varphi + \frac{2}{3}\pi\right) + V_m \sin\left(\varphi - \frac{2}{3}\pi\right)\cos\left(\varphi - \frac{2}{3}\pi\right)$$

$$= V_m \frac{\sin 2\varphi}{2} + V_m \frac{\sin\left(2\varphi + \frac{4}{3}\pi\right)}{2} + V_m \frac{\sin\left(2\varphi - \frac{4}{3}\pi\right)}{2}$$

$$= V_m \frac{\sin 2\varphi}{2} + V_m \frac{\sin 2\varphi (-0.5)}{2} + V_m \frac{\sin 2\varphi (-0.5)}{2}$$

$$= 0$$

The q-axis voltage $v_q$ is calculated as follows.

[Math 10]

$$v_q = V_m \sin\varphi \times \sqrt{\frac{2}{3}}\sin\varphi + V_m \sin\left(\varphi + \frac{2}{3}\pi\right) \times \sqrt{\frac{2}{3}}\sin\left(\varphi + \frac{2}{3}\pi\right) + V_m \sin\left(\varphi - \frac{2}{3}\pi\right) \times \sqrt{\frac{2}{3}}\sin\left(\varphi - \frac{2}{3}\pi\right)$$

$$= V_m' \sin^2\varphi + V_m' \sin^2\left(\varphi + \frac{2}{3}\pi\right) + V_m' \sin^2\left(\varphi - \frac{2}{3}\pi\right)$$

$$= V_m'\left(\frac{1 - \cos 2\varphi}{2}\right) + V_m'\left(\frac{1 - \cos\left(2\varphi + \frac{4}{3}\pi\right)}{2}\right) + V_m'\left(\frac{1 - \cos\left(2\varphi - \frac{4}{3}\pi\right)}{2}\right)$$

$$= V_m'\left(\frac{1}{2} - \frac{\cos 2\varphi}{2}\right) + V_m'\left(\frac{1}{2} - \frac{\cos 2\varphi \cos\frac{4}{3}\pi - \sin 2\varphi \sin\frac{4}{3}\pi}{2}\right) + V_m'\left(\frac{1}{2} - \frac{\cos 2\varphi \cos\frac{4}{3}\pi + \sin 2\varphi \sin\frac{4}{3}\pi}{2}\right)$$

$$= V_m'\left(\frac{1}{2} - \frac{\cos 2\varphi}{2}\right) + V_m'\left(\frac{1}{2} + \frac{\cos 2\varphi\, 0.5}{2}\right) + V_m'\left(\frac{1}{2} + \frac{\cos 2\varphi\, 0.5}{2}\right)$$

$$= \sqrt{\frac{3}{2}}V_m$$

As described above, if no correction signal is added to the inverter control signal and the control signal has only a fundamental wave (the first degree), a DC voltage is produced when the dq-coordinate transformation is performed by multiplication of the three-phase voltage by the rotation matrix. The above calculation assumes that the phase of the U phase is 0 [deg].

In contrast, if, in the control unit (200), the sixth degree harmonic component as a correction signal is added to the inverter-control signal, the three-phase voltages ($v_u$, $v_y$, $v_w$), for example, are expressed as follows, where the power source voltage is $V_m$, the electrical angle is $\varphi$, and the amplitude of the sixth degree harmonic is $V_6$.

[Math 11]

$$v_u = V_m \sin\varphi + V_6 \sin 6\varphi$$

$$v_v = V_m \sin\left(\varphi + \frac{2}{3}\pi\right) + V_6 \sin\left(6\varphi + \frac{2}{3}\pi\right)$$

$$v_w = V_m \sin\left(\varphi - \frac{2}{3}\pi\right) + V_6 \sin\left(6\varphi - \frac{2}{3}\pi\right)$$

Using the dq-axis transformation matrix Z described above, the three-phase (UVW phase) voltages ($v_u$, $v_y$, $v_w$) are transformed into dq-axis voltages ($v_d$, $v_q$) as follows.

[Math 12]

$$\begin{pmatrix} v_d \\ v_q \end{pmatrix} = Z\begin{pmatrix} v_u \\ v_v \\ v_w \end{pmatrix}$$

$$= \sqrt{\frac{2}{3}}\begin{pmatrix} \cos\varphi & \cos\left(\varphi + \frac{2}{3}\pi\right) & \cos\left(\varphi - \frac{2}{3}\pi\right) \\ \sin\varphi & \sin\left(\varphi + \frac{2}{3}\pi\right) & \sin\left(\varphi - \frac{2}{3}\pi\right) \end{pmatrix}\begin{pmatrix} V_m \sin\varphi + V_6 \sin 6\varphi \\ V_m \sin\left(\varphi + \frac{2}{3}\pi\right) + V_6 \sin\left(\varphi + \frac{2}{3}\pi\right) \\ V_m \sin\left(\varphi - \frac{2}{3}\pi\right) + V_6 \sin\left(\varphi - \frac{2}{3}\pi\right) \end{pmatrix}$$

Accordingly, the d-axis voltage $v_q$ is calculated as follows.

[Math 13]

$$v_d = (V_m \sin\varphi + V_6 \sin 6\varphi) \times \sqrt{\frac{2}{3}}\cos\varphi + \left(V_m \sin\left(\varphi + \frac{2}{3}\pi\right) + V_6 \sin\left(6\varphi + \frac{2}{3}\pi\right)\right) \times \sqrt{\frac{2}{3}}\cos\left(\varphi + \frac{2}{3}\pi\right) + \left(V_m \sin\left(\varphi - \frac{2}{3}\pi\right) + V_6 \sin\left(6\varphi - \frac{2}{3}\pi\right)\right) \times \sqrt{\frac{2}{3}}\cos\left(\varphi - \frac{2}{3}\pi\right)$$

$$= V_m \sin\varphi\cos\varphi + V_6 \sin 6\varphi\cos\varphi + V_m \sin\left(\varphi + \frac{2}{3}\pi\right)\cos\left(\varphi + \frac{2}{3}\pi\right) + V_6 \sin\left(6\varphi + \frac{2}{3}\pi\right)\cos\left(\varphi + \frac{2}{3}\pi\right) + V_m \sin\left(\varphi - \frac{2}{3}\pi\right)\cos\left(\varphi - \frac{2}{3}\pi\right) + V_6 \sin\left(6\varphi - \frac{2}{3}\pi\right)\cos\left(\varphi - \frac{2}{3}\pi\right)$$

$$= V_6 \sin 6\varphi\cos\varphi + V_6 \sin\left(6\varphi + \frac{2}{3}\pi\right)\cos\left(\varphi + \frac{2}{3}\pi\right) + V_6 \sin\left(6\varphi - \frac{2}{3}\pi\right)\cos\left(\varphi - \frac{2}{3}\pi\right)$$

$$= V_6 \frac{\sin 7\varphi + \sin 5\varphi}{2} + V_6 \frac{\sin\left(7\varphi + \frac{4}{3}\pi\right) + \sin 5\varphi}{2} + V_6 \frac{\sin\left(7\varphi - \frac{4}{3}\pi\right) + \sin 5\varphi}{2}$$

$$= V_6 \frac{\sin 7\varphi + \sin 5\varphi}{2} + V_6 \frac{-0.5\sin 7\varphi + \sin 5\varphi}{2} + V_6 \frac{-0.5\sin 7\varphi + \sin 5\varphi}{2}$$

$$= \frac{3}{2}V_6 \sin 5\varphi = \sqrt{\frac{3}{2}}V_6 \sin 5\varphi$$

The calculation of the d-axis voltage $v_d$ assumes $V_m \times \sqrt{2/3} = V_m{}'$ and $V_6 \times \sqrt{2/3} = V_6{}'$. In the second expression on the right side, the sum of the first, third, and fifth terms including $V_m$ is zero. Transformation from the fourth expression to the fifth expression on the right side uses the following relational expressions.

[Math 14]

$$\sin\left(7\varphi + \frac{4}{3}\pi\right) = \sin 7\varphi\cos\frac{4}{3}\pi + \cos 7\varphi\sin\frac{4}{3}\pi = -0.5\sin 7\varphi - 0.86\cos 7\varphi$$

$$\sin\left(7\varphi - \frac{4}{3}\pi\right) = \sin 7\varphi\cos\frac{4}{3}\pi - \cos 7\varphi\sin\frac{4}{3}\pi = -0.5\sin 7\varphi + 0.86\cos 7\varphi$$

On the other hand, the q-axis voltage $v_q$ is calculated as follows.

[Math 15]

$$v_q = (V_m \sin\varphi + V_6 \sin 6\varphi) \times \sqrt{\frac{2}{3}}\sin\varphi + \left(V_m \sin\left(\varphi + \frac{2}{3}\pi\right) + V_6 \sin\left(6\varphi + \frac{2}{3}\pi\right)\right) \times \sqrt{\frac{2}{3}}\sin\left(\varphi + \frac{2}{3}\pi\right) + \left(V_m \sin\left(\varphi - \frac{2}{3}\pi\right) + V_6 \sin\left(6\varphi - \frac{2}{3}\pi\right)\right) \times \sqrt{\frac{2}{3}}\sin\left(\varphi - \frac{2}{3}\pi\right)$$

$$= V_m{}' \sin^2\varphi + V_6{}' \sin 6\varphi\sin\varphi + V_m{}' \sin^2\left(\varphi + \frac{2}{3}\pi\right) + V_6{}' \sin\left(6\varphi + \frac{2}{3}\pi\right)\sin\left(\varphi + \frac{2}{3}\pi\right) + V_m{}' \sin^2\left(\varphi - \frac{2}{3}\pi\right) + V_6{}' \sin\left(6\varphi - \frac{2}{3}\pi\right)\sin\left(\varphi - \frac{2}{3}\pi\right)$$

$$= V_6{}' \sin 6\varphi\sin\varphi + V_6{}' \sin\left(6\varphi + \frac{2}{3}\pi\right)\sin\left(\varphi + \frac{2}{3}\pi\right) + V_6{}' \sin\left(6\varphi - \frac{2}{3}\pi\right)\sin\left(\varphi - \frac{2}{3}\pi\right) + \sqrt{\frac{3}{2}}V_m{}'$$

$$= V_6{}' \frac{\cos 5\varphi - \cos 7\varphi}{2} + V_6{}' \frac{\cos 5\varphi - \cos\left(7\varphi + \frac{4}{3}\pi\right)}{2} + V_6{}' \frac{\cos 5\varphi - \cos\left(7\varphi + \frac{4}{3}\pi\right)}{2} + \sqrt{\frac{3}{2}}V_m{}'$$

$$= V_6{}' \frac{\cos 5\varphi - \cos 7\varphi}{2} + V_6{}' \frac{-0.5\cos 7\varphi + \cos 5\varphi}{2} + V_6{}' \frac{-0.5\cos 7\varphi + \cos 5\varphi}{2} + \sqrt{\frac{3}{2}}V_m{}'$$

$$= \frac{3}{2}V_6{}' \cos 5\varphi + \sqrt{\frac{3}{2}}V_m{}' = \sqrt{\frac{3}{2}}V_6{}' \cos 5\varphi + \sqrt{\frac{3}{2}}V_m{}'$$

The calculation of the q-axis voltage $v_q$ assumes $V_m \times \sqrt{2/3} = V_m{}'$ and $V_6 \times \sqrt{2/3} = V_6{}'$. In the second expression on the right side, the sum of the first, third, and fifth terms including $V_m{}'$ is $\sqrt{3/2} \times V_m$. Transformation from the fourth expression to the fifth expression on the right side uses the following relational expressions.

[Math 16]

$$\cos\left(7\varphi + \frac{4}{3}\pi\right) = \cos 7\varphi \cos\frac{4}{3}\pi - \sin 7\varphi \sin\frac{4}{3}\pi = -0.5\cos 7\varphi - 0.86\sin 7\varphi$$

$$\sin\left(7\varphi - \frac{4}{3}\pi\right) = \cos 7\varphi \cos\frac{4}{3}\pi + \sin 7\varphi \sin\frac{4}{3}\pi = -0.5\cos 7\varphi + 0.86\sin 7\varphi$$

As described above, if the sixth harmonic component is added as a correction signal to the inverter control signal, and then a composite wave (three-phase voltages in this example) on which the sixth harmonic component is superimposed is subjected to dq-coordinate transformation, a waveform where the fifth harmonic component is superimposed on a DC voltage component is produced. Accordingly, it can be found that if a composite wave on which an N-th degree harmonic component is superimposed is subjected to dq-coordinate transformation, a waveform where an (N-1)-th degree harmonic component is superimposed on a DC component is produced.

For example, for a bearingless motor (of a BPM type) with four poles and 36 slots shown in FIG. 4, it is necessary to add correction signals of second, sixth, twelfth, and eighteenth harmonic components of the rotational frequency (the angular rotational speed) to the control signal. In this case, if dq transformation is performed, a waveform where frequencies of one, five, eleven, and seventeen times the angular rotational speed are superimposed on a DC component is produced.

As described above, for example, when the motor current and the shaft support current as three-phase alternating currents are subjected to dq-coordinate transformation, the degree of the harmonic is reduced by one degree. Thus, the degree of the correction signal for correcting the control signal after the dq-coordinate transformation is also reduced by one degree. For example, when the sixth harmonic needs to be superimposed on a voltage or a current, a correction signal of the fifth harmonic component is added to the control signal after the dq-coordinate transformation. Specifically, the harmonic components of the correction signals for correcting the shaft support winding current command values (isd*, isq*) (the control signals to the current controller (213) in FIG. 7), the shaft support winding voltage command values (vsd*, vsq*) (before the inverse dq-coordinate transformation) (the control signals to the inverse dq-coordinate transformation unit (214) in FIG. 7), and the like, as control signals after the dq-coordinate transformation, each have a degree lower by one degree than the degree of the spatial harmonic to be corrected, which is determined by the characteristics of the shape of the magnetic circuit of the bearingless motor. That is, the degree of the harmonic component of a correction signal for correcting a control signal in the dq coordinate axis and the degree of the harmonic component of a correction signal for correcting a control signal in the uvw coordinate axis or the xy coordinate axis are different by one degree.

<Features of Embodiment>

As described above, in the bearingless motor system (100) of this embodiment, the control unit (200) commands one or both of the first inverter (114) serving for shaft support and the second inverter (116) serving for motor drive to output a voltage or a current on which a harmonic is superimposed in order to reduce the fluctuation in the shaft support force, where the harmonic is obtained by multiplication of the rotational frequency of the bearingless motor (110) by a natural number of two or more. Accordingly, the fluctuation in the magnitude of the mutual inductance between the shaft support winding (113) and the motor winding (115) depending on the rotational angle (or the electrical angle) of the rotor (111) of the bearingless motor (110) due to the spatial harmonic determined by the characteristics of the magnetic circuit of the bearingless motor (110) can be reduced. Accordingly, independently from the rotational angle (the electrical angle) of the rotor, a desired shaft support force can be generated. Thus, the vibration of the rotary shaft (101) in the radial direction can be reduced, and the rotary shaft (101) can be rotated smoothly.

Typically, when a rotational angle (electrical angle) of a rotor, which has any of various structures such as an SPM type, an Inset type, an IPM type, a BPM type, and a Consecutive Pole type, changes, the mutual inductance described above changes and then the shaft support force fluctuates depending on the electrical angle due to the spatial harmonic determined by the characteristics of the magnetic circuit of the bearingless motor. In contrast, the inverter control of this embodiment is applicable even if the structure of the rotor is changed, and the fluctuation in the shaft support force can be reduced.

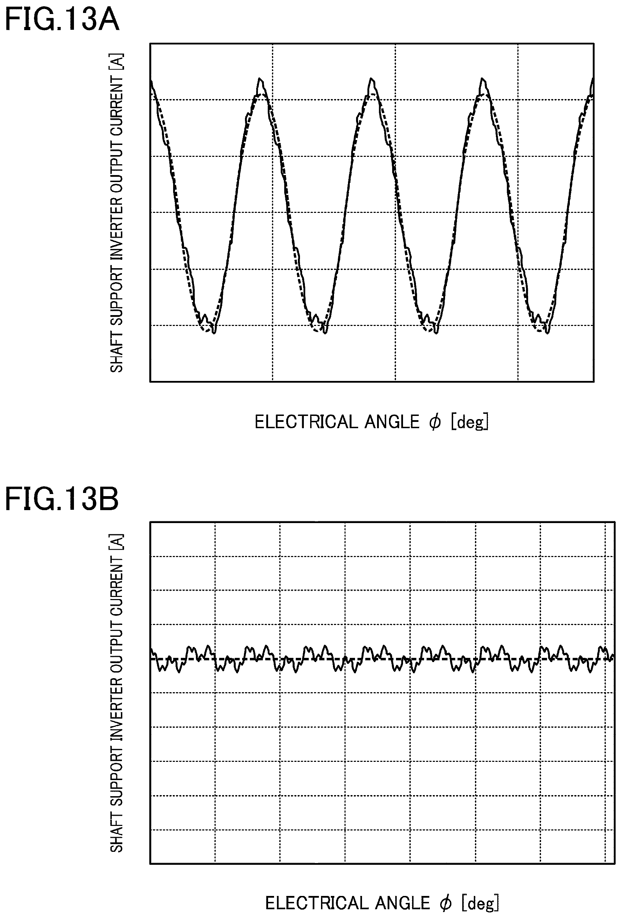

FIG. 13A and FIG. 13B schematically show waveforms of currents output from the first inverter (114) serving for shaft support in the bearingless motor system (100) of this embodiment. If the bearingless motor system (100) is of an SPM type, an Inset type, an IPM type, a BPM type, or the like where the shaft support winding (113) is driven by an alternating current, a waveform of an output current as shown in FIG. 13A is produced. If the bearingless motor system (100) is a Consecutive Pole type or the like where the shaft support winding (113) is driven by a direct current, a waveform of an output current as shown in FIG. 13B is produced. In FIGS. 13A and 13B, a waveform of an output current produced by a typical technique where no correction signal of the harmonic component is added to an inverter control signal is represented by a broken line.

In the bearingless motor system (100) of this embodiment, the degree of the harmonic obtained by multiplication of the rotational frequency of the bearingless motor (110) by a natural number of two or more may be determined based on one or more factors selected from the following: the number obtained by division of the number of first slots (121) each provided with the shaft support winding (113) and the motor winding (115) by the number of pole pairs of the bearingless motor (110); the number obtained by division of the number of second slots (122) each provided with the permanent magnet (123A, 123B) by the number of pole pairs of the bearingless motor (110); the number of permanent magnets (123A, 123B) constituting one magnetic pole of the rotor (111); and the number of pole pairs of the bearingless motor (110). Accordingly, the fluctuation in the magnitude of the mutual inductance between the shaft support winding (113) and the motor winding (115) depending on the rotational angle (electrical angle) of the rotor (111) due to the spatial harmonic determined by the characteristics of the magnetic circuit of the bearingless motor (110) can be reduced.

In the bearingless motor system (100) of this embodiment, by adding a correction signal to a control signal of one or both of the first inverter (114) serving for shaft support and the second inverter (116) serving for motor drive, the control unit (200) may output a voltage or a current on which the harmonic obtained by multiplication of the rotational frequency of the bearingless motor (110) by a natural number of two or more are superimposed. Accordingly, the harmonic that cancels the influence of the spatial harmonic determined by the characteristics of the magnetic circuit of the bearingless motor (110) can be superimposed on the control signal of the first inverter (114) or the control signal of the second inverter (116). In this case, when a correction signal is determined based on the rotational angle (electrical angle) of the rotor (111), the current value of the shaft support winding (113), and the current value of the motor winding (115), the influence of the spatial harmonic determined by the characteristics of the magnetic circuit of the bearingless motor (110) can be cancelled by addition of the correction signal to the control signal of one or both of the first inverter (114) and the second inverter (116).

According to the compressor (10) including the bearingless motor system (100) of this embodiment, in the bearingless motor system (100), a desired shaft support force can be generated independently from the rotational angle (the electrical angle) of the rotor (111), and thus the compressor (10) can operate stably with higher reliability.

(Second Embodiment)

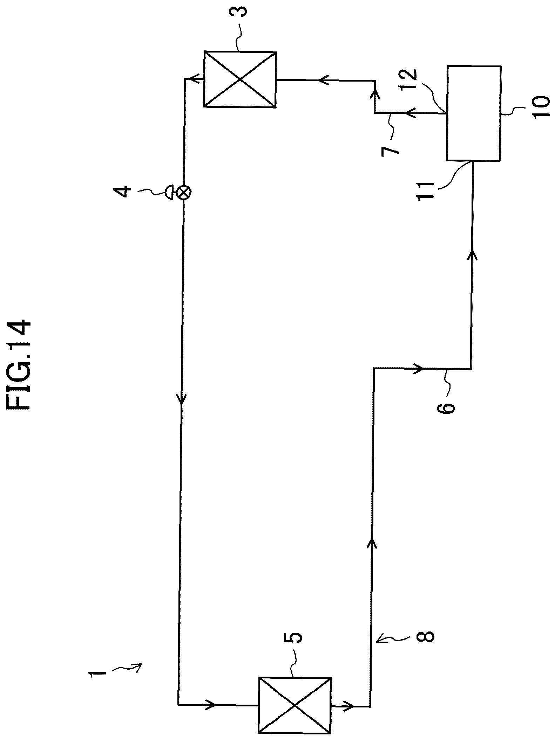

An air conditioner (1) shown in FIG. 14 will be described below as an example of a refrigeration apparatus including the compressor (10) provided with the bearingless motor system (100) of the first embodiment (including variations; the same also applies hereinafter).

The air conditioner (1) is an apparatus that conditions air in a target space through a vapor compression refrigeration cycle. The air conditioner (1) is capable of executing a cooling operation, and includes, as main components, the compressor (10), a heat-source-side heat exchanger (3), an expansion mechanism (4), and a utilization-side heat exchanger (5).

The compressor (10) sucks, via an inlet (11), a low-pressure refrigerant flowing through a suction pipe (6); compresses the refrigerant sucked via the inlet (11) into a highpressure refrigerant; and then discharges the resultant refrigerant to a discharge pipe (7) via an outlet (12). The suction pipe (6) is a refrigerant pipe which guides a refrigerant discharged out of the utilization-side heat exchanger (5) to the suction side (inlet (11)) of the compressor (10). The discharge pipe (7) is a refrigerant pipe which guides a refrigerant discharged out of the compressor (10) via the outlet (12) to an entrance to the heat-source-side heat exchanger (3).

The compressor (10) includes, as main components, a rotary shaft (101), impellers (102, 103), and a bearingless motor (110) as described in the first embodiment, for example. The driving force of the bearingless motor (110) is transmitted from the rotary shaft (101) to the impellers (102, 103), and the impellers (102, 103) rotate about the rotary shaft (101) as an axis. Accordingly, the compressor (10) compresses the sucked refrigerant flowing thereinto via the inlet (11).

The heat-source-side heat exchanger (3) functions as a refrigerant radiator that radiates heat from a refrigerant discharged from the compressor (10) by exchanging heat between a refrigerant and water or air serving as a cooling source. One end of the heat-source-side heat exchanger (3) is connected to the outlet (12) of the compressor (10) via the discharge pipe (7). The other end of the heat-source-side heat exchanger (3) is connected to the expansion mechanism (4).

The expansion mechanism (4) is a mechanism for reducing the pressure of a refrigerant that has radiated heat in the heat-source-side heat exchanger (3), and is configured as, for example, an electric expansion valve. One end of the expansion mechanism (4) is connected to the heat-source-side heat exchanger (3). The other end of the expansion mechanism (4) is connected to the utilization-side heat exchanger (5).

The utilization-side heat exchanger (5) functions as a refrigerant heater that heats a refrigerant decompressed in the expansion mechanism (4) by exchanging heat between a refrigerant and water or air serving as a heating source. One end of the utilization-side heat exchanger (5) is connected to the expansion mechanism (4). The other end of the utilization-side heat exchanger (5) is connected to the inlet (11) of the compressor (10) via the suction pipe (6).

As described above, in the air conditioner (1), the compressor (10), the heat-source-side heat exchanger (3), the expansion mechanism (4), and the utilization-side heat exchanger (5) are sequentially connected together through refrigerant pipes including the suction pipe (6) and the discharge pipe (7) to form a path (8) through which a refrigerant circulates.

The refrigeration apparatus (the air conditioner (1)) of this embodiment uses the compressor (10) driven by the bearingless motor system (100) of the first embodiment. Thus, the bearingless motor system (100) can generate a desired shaft support force independently from the rotational angle (the electrical angle) of the rotor (111), and the refrigeration apparatus can operate stably with higher reliability.

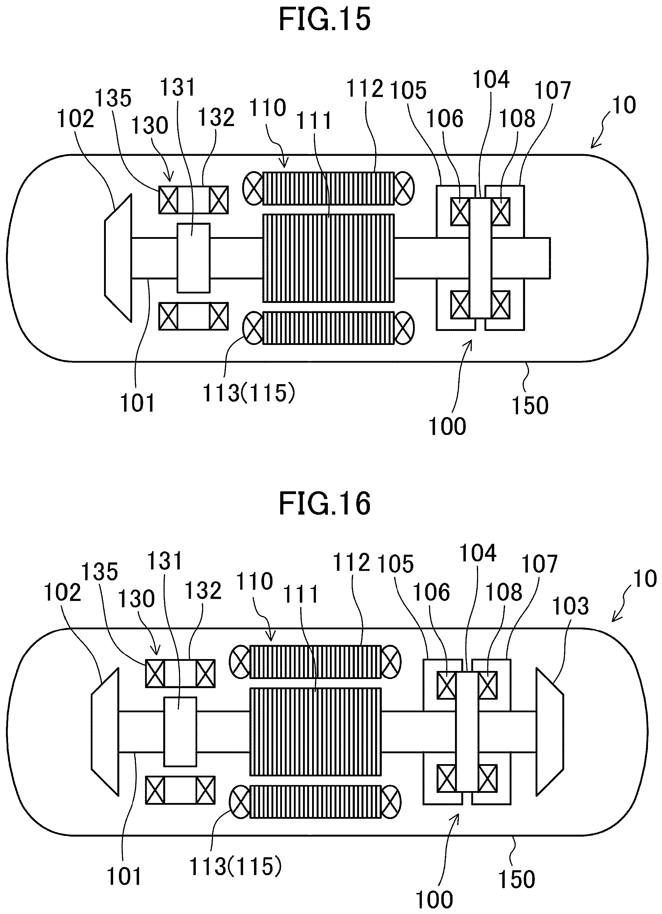

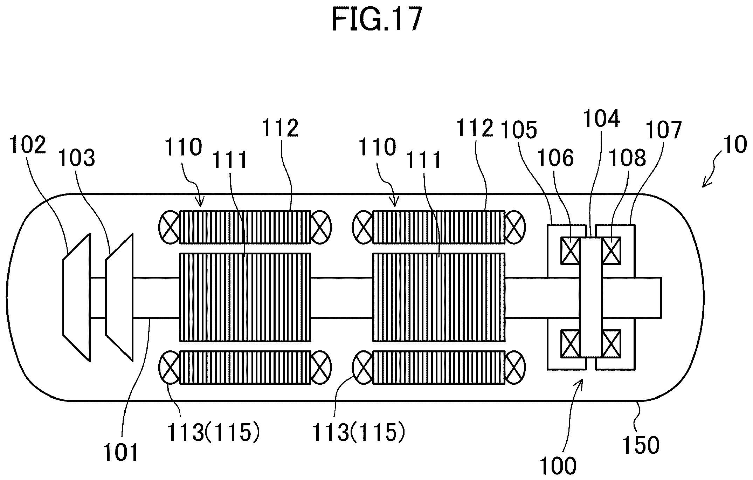

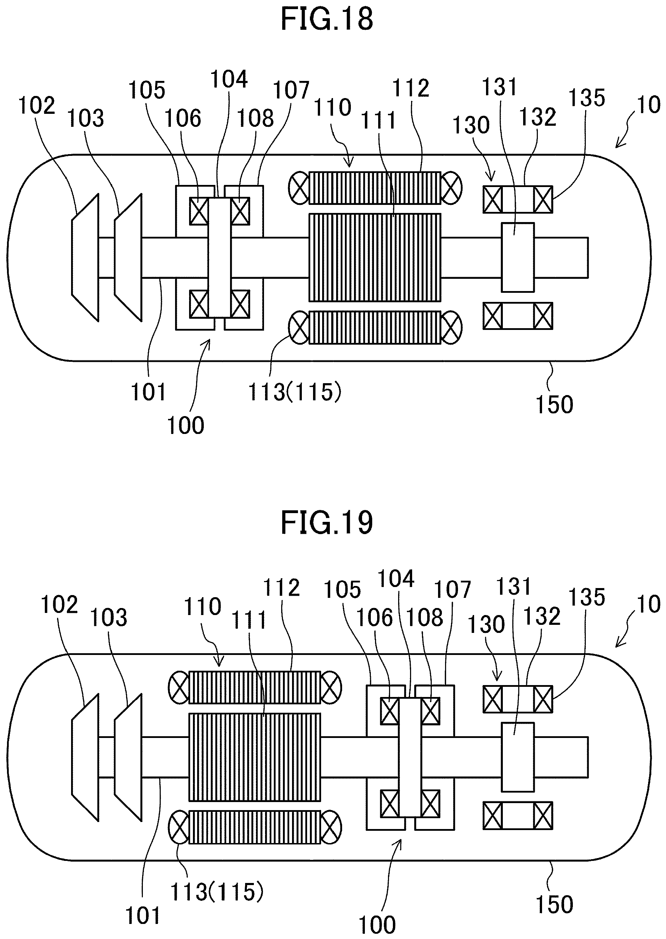

The configuration of the compressor (10) applicable to the refrigeration apparatus (the air conditioner (1)) of this embodiment is not limited to the example shown in FIG. 1. In the example shown in FIG. 1, the two impellers (102, 103) are provided at one of the axial ends of the rotary shaft (101). Instead, as shown in FIG. 15, the impeller (102) may be provided alone, or as shown in FIG. 16, the second impeller (103) may be provided at the other one of the axial ends of the rotary shaft (101). In the example shown in FIG. 1, the one bearingless motor (110) and the one radial magnetic bearing (130) support the rotary shaft (101) in the radial direction. Instead, as shown in FIG. 17, the two bearingless motors (110) may support the rotary shaft (101) in the radial direction without the radial magnetic bearing (130). In the example shown in FIG. 1, the thrust magnetic bearings (105, 107) are disposed at the end of the rotary shaft (101) opposite to the impellers (102, 103). Instead, as shown in FIG. 18, the thrust magnetic bearings (105, 107) may be disposed near the impellers (102, 103), or as shown in FIG. 19, the thrust magnetic bearings (105, 107) may be disposed between the bearingless motor (110) and the radial magnetic bearing (130).

(Other Embodiments)

In the above embodiments (including variations; the same also applies hereinafter), an example of the bearingless motor system (100) being applied to the compressor (10) have been described. However, the usage of the bearingless motor system (100) is not limited, and the bearingless motor system (100) is applicable to a rotary electric machine such as a generator; various devices including that rotary electric machine; or the like.

While the embodiments have been described above, it will be understood that various changes in form and details can be made without departing from the scope of the claims. The foregoing embodiments and variations may be appropriately combined or replaced as appropriate.

INDUSTRIAL APPLICABILITY

As described above, the present invention is useful for a bearingless motor system, a compressor, and a refrigeration apparatus.

DESCRIPTION OF REFERENCE CHARACTERS

| | |
|---|---|
| 1 | Air Conditioner (Refrigeration Apparatus) |
| 10 | Compressor |
| 100 | Bearingless Motor System |
| 101 | Rotary Shaft |
| 102 | First Impeller (Compression Mechanism) |
| 103 | Second impeller (Compression Mechanism) |
| 110 | Bearingless Motor |
| 111 | Rotor |
| 112 | Stator |
| 113 | Shaft Support Winding |
| 114 | First Inverter |
| 115 | Motor Winding |
| 116 | Second Inverter |
| 121 | First Slot |
| 122 | Second Slot |
| 123A, 123B | Permanent Magnet |

**Claims**

1. A bearingless motor system, comprising:

   a rotary shaft (101);
   a bearingless motor (110) including a rotor (111) provided on the rotary shaft (101), and a stator (112) provided radially outside the rotor (111) and including a shaft support winding (113) and a motor winding (115);
   a first inverter (114) configured to supply electric power to the shaft support winding (113) to generate a shaft support force for supporting the rotary shaft (101) in a non-contact manner;
   a second inverter (116) configured to supply electric power to the motor winding (115) to generate a rotational torque in the rotary shaft (101); and
   a control unit (200) configured to control the first inverter (114) and the second inverter (116),
   **characterized in that**
   the control unit (200) commands one or both of the first inverter (114) and the second inverter (116) to output a voltage or a current on which a harmonic is superimposed in order to reduce a fluctuation in the shaft support force, where the harmonic is obtained by multiplication of a rotational frequency of the bearingless motor (110) by a natural number of two or more, and
   the shaft support winding (113) and the motor winding (115) are disposed in a plurality of first slots (121) arranged on the stator (112) in a circumferential direction, wherein
   a degree of the harmonic is determined based on one or more factors selected from the number obtained by division of the number of the first slots (121) by the number of pole pairs of the bearingless motor (110), and the number of pole pairs.

2. A bearingless motor system, comprising:

   a rotary shaft (101);
   a bearingless motor (110) including a rotor (111) provided on the rotary shaft (101), and a stator (112) provided radially outside the rotor (111) and including a shaft support winding (113) and a motor winding (115);
   a first inverter (114) configured to supply electric power to the shaft support winding (113) to generate a shaft support force for supporting the rotary shaft (101) in a non-contact manner;
   a second inverter (116) configured to supply electric power to the motor winding (115) to generate a rotational torque in the rotary shaft (101); and
   a control unit (200) configured to control the first inverter (114) and the second inverter (116),
   **characterized in that**
   the control unit (200) commands one or both of the first inverter (114) and the second inverter (116) to output a voltage or a current on which a harmonic is superimposed in order to reduce a fluctuation in the shaft support force, where the harmonic is obtained by multiplication of a rotational frequency of the bearingless motor (110) by a natural number of two or more,
   the rotor (111) includes a plurality of permanent magnets (123A, 123B),
   the permanent magnets (123A, 123B) are disposed in a plurality of second slots (122) arranged on the rotor (111) in a circumferential direction, wherein
   a degree of the harmonic is determined based on one or more factors selected from the number obtained by division of the number of the second slots (122) by the number of pole pairs of the bearingless motor (110), and the number of the permanent magnets (123A, 123B) constituting one magnetic pole of the rotor (111).

3. The bearingless motor system of claims 1 or 2, wherein

   the control unit (200) adds a correction signal to a control signal of one or both of the first inverter (114) and the second inverter (116), thereby commanding the one or both of the first inverter (114) and the second inverter (116) to output the voltage or the current on which the harmonic is superimposed, wherein
   the correction signal is determined based on an electrical angle of the rotor (111), a current value of the shaft support winding (113), and a current value of the motor winding (115).

4. A compressor, comprising:

   the bearingless motor system (100) of any one of claims 1 to 3; and
   a compression mechanism (102, 103) driven by the bearingless motor system (100) to compress a fluid.

**5.** A refrigeration apparatus, comprising:
the compressor (10) of claim 4.

**Patentansprüche**

**1.** Lagerloses Motorsystem, umfassend:

eine Drehwelle (101);
einen lagerlosen Motor (110), der einen Rotor (111), der an der Drehwelle (101) bereitgestellt ist, und einen Stator (112) einschließt, der radial außerhalb des Rotors (111) bereitgestellt ist und eine Wellenlagerwicklung (113) und eine Motorwicklung (115) einschließt;
einen ersten Wechselrichter (114), der konfiguriert ist, die Wellenlagerwicklung (113) mit elektrischer Leistung zu versorgen, um eine Wellenstützkraft zum Stützen der Drehwelle (101) in berührungsloser Weise zu erzeugen;
einen zweiten Wechselrichter (116), der konfiguriert ist, die Motorwicklung (115) mit elektrischer Leistung zu versorgen, um ein Drehmoment in der Drehwelle (101) zu erzeugen; und
eine Steuereinheit (200), die konfiguriert ist, den ersten Wechselrichter (114) und den zweiten Wechselrichter (116) zu steuern,
**dadurch gekennzeichnet, dass**
die Steuereinheit (200) einen oder beide von dem ersten Wechselrichter (114) und dem zweiten Wechselrichter (116) befehlt, eine Spannung oder einen Strom auszugeben, auf denen eine Oberschwingung überlagert ist, um eine Schwankung der Wellenstützkraft zu verringern, wobei die Oberschwingung durch Multiplikation einer Drehfrequenz des lagerlosen Motors (110) mit einer natürlichen Zahl, die größer oder gleich zwei ist, erhalten wird, und
die Wellenlagerwicklung (113) und die Motorwicklung (115) in einer Vielzahl von ersten Nuten (121), die am Stator (112) in einer Umfangsrichtung angeordnet sind, angeordnet sind, wobei
eine Ordnung der Oberschwingung basierend auf einem oder mehreren Faktoren bestimmt wird, die aus der Zahl, die durch Division der Zahl der ersten Nuten (121) durch die Zahl der Polpaare des lagerlosen Motors (110) erhalten wird, und der Zahl der Polpaare ausgewählt sind.

**2.** Lagerloses Motorsystem, umfassend:

eine Drehwelle (101);
einen lagerlosen Motor (110), der einen Rotor (111), der an der Drehwelle (101) bereitgestellt ist, und einen Stator (112) einschließt, der radial außerhalb des Rotors (111) bereitgestellt ist und eine Wellenlagerwicklung (113) und eine Motorwicklung (115) einschließt;
einen ersten Wechselrichter (114), der konfiguriert ist, die Wellenlagerwicklung (113) mit elektrischer Leistung zu versorgen, um eine Wellenstützkraft zum Stützen der Drehwelle (101) in berührungsloser Weise zu erzeugen;
einen zweiten Wechselrichter (116), der konfiguriert ist, die Motorwicklung (115) mit elektrischer Leistung zu versorgen, um ein Drehmoment in der Drehwelle (101) zu erzeugen; und
eine Steuereinheit (200), die konfiguriert ist, den ersten Wechselrichter (114) und den zweiten Wechselrichter (116) zu steuern,
**dadurch gekennzeichnet, dass**
die Steuereinheit (200) einen oder beide von dem ersten Wechselrichter (114) und dem zweiten Wechselrichter (116) befehlt, eine Spannung oder einen Strom auszugeben, auf denen eine Oberschwingung überlagert ist, um eine Schwankung der Wellenstützkraft zu verringern, wobei die Oberschwingung durch Multiplikation einer Drehfrequenz des lagerlosen Motors (110) mit einer natürlichen Zahl, die größer oder gleich zwei ist, erhalten wird,
der Rotor (111) eine Vielzahl von Permanentmagneten (123A, 123B) einschließt,
die Permanentmagnete (123A, 123B) in einer Vielzahl von zweiten Nuten (122), die am Rotor (111) in einer Umfangsrichtung angeordnet sind, angeordnet sind, wobei
eine Ordnung der Oberschwingung basierend auf einem oder mehreren Faktoren bestimmt wird, die aus der Zahl, die durch Division der Zahl der zweiten Nuten (122) durch die Zahl der Polpaare des lagerlosen Motors (110) erhalten wird, und der Zahl der Permanentmagnete (123A, 123B), die einen Magnetpol des Rotors (111) bilden, ausgewählt sind.

**3.** Lagerloses Motorsystem nach Anspruch 1 oder 2, wobei

die Steuereinheit (200) einem Steuersignal eines oder beider des ersten Wechselrichters (114) und des zweiten Wechselrichters (116) ein Korrektursignal hinzufügt, wodurch die Steuereinheit einen oder beide von dem ersten Wechselrichter (114) und dem zweiten Wechselrichter (116) befehlt, die Spannung oder den Strom auszugeben, auf denen die Oberschwingung überlagert ist, wobei

das Korrektursignal bestimmt wird, basierend auf einem elektrischen Winkel des Rotors (111), einem Stromwert der Wellenlagerwicklung (113) und einem Stromwert der Motorwicklung (115).

**4.** Verdichter, umfassend:

das lagerlose Motorsystem (100) nach einem der Ansprüche 1 bis 3; und
einen Verdichtungsmechanismus (102, 103), der durch das lagerlose Motorsystem (100) angetrieben ist, um ein Fluid zu verdichten.

**5.** Kühleinrichtung, umfassend:
den Verdichter (10) nach Anspruch 4.


**Revendications**

**1.** Système de moteur sans palier, comprenant :

un arbre rotatif (101) ;
un moteur sans palier (110) incluant un rotor (111) agencé sur l'arbre rotatif (101), et un stator (112) agencé radialement à l'extérieur du rotor (111) et incluant un bobinage (113) de support d'arbre et un bobinage (115) de moteur ;
un premier onduleur (114) configuré pour fournir une puissance électrique au bobinage (113) de support d'arbre pour générer une force de support d'arbre pour supporter l'arbre rotatif (101) de manière sans contact ;
un deuxième onduleur (116) configuré pour fournir une puissance électrique au bobinage (115) de moteur pour générer un couple de rotation dans l'arbre rotatif (101) ; et,
une unité de commande (200) configurée pour commander le premier onduleur (114) et le deuxième onduleur (116),
**caractérisé en ce que**
l'unité de commande (200) ordonne à un ou aux deux parmi le premier onduleur (114) et le deuxième onduleur (116) d'émettre en sortie une tension ou un courant sur lequel est superposée une harmonique de manière à réduire une fluctuation de la force de support d'arbre, l'harmonique étant obtenue par multiplication d'une fréquence de rotation du moteur sans palier (110) par un nombre naturel supérieur ou égal à deux, et le bobinage (113) de support d'arbre et le bobinage (115) de moteur sont disposés dans une pluralité de premières encoches (121) ménagées sur le stator (112) dans une direction circonférentielle, dans lequel
l'ordre de l'harmonique est déterminé sur la base d'un ou plusieurs facteurs sélectionnés parmi le nombre obtenu par la division du nombre de premières encoches (121) par le nombre de paires de pôles du moteur sans palier (110), et le nombre de paires de pôles.

**2.** Système de moteur sans palier, comprenant :

un arbre rotatif (101) ;
un moteur sans palier (110) incluant un rotor (111) agencé sur l'arbre rotatif (101), et un stator (112) agencé radialement à l'extérieur du rotor (111) et incluant un bobinage (113) de support d'arbre et un bobinage (115) de moteur ;
un premier onduleur (114) configuré pour fournir une puissance électrique au bobinage (113) de support d'arbre pour générer une force de support d'arbre pour supporter l'arbre rotatif (101) de manière sans contact ;
un deuxième onduleur (116) configuré pour fournir une puissance électrique au bobinage (115) de moteur pour générer un couple de rotation dans l'arbre rotatif (101) ; et,
une unité de commande (200) configurée pour commander le premier onduleur (114) et le deuxième onduleur (116),
**caractérisé en ce que**
l'unité de commande (200) ordonne à un ou aux deux parmi le premier onduleur (114) et le deuxième onduleur (116) d'émettre en sortie une tension ou un courant sur lequel est superposée une harmonique de manière à réduire une fluctuation de la force de support d'arbre, l'harmonique étant obtenue par multiplication d'une fréquence de rotation du moteur sans palier (110) par un nombre naturel supérieur ou égal à deux,
le rotor (111) inclut une pluralité d'aimants permanents (123A, 123B),
les aimants permanents (123A, 123B) sont disposés dans une pluralité de deuxièmes encoches (122) ménagées sur le rotor (111) dans une direction circonférentielle, dans lequel
l'ordre de l'harmonique est déterminé sur la base d'un ou plusieurs facteurs sélectionnés parmi le nombre obtenu par la division du nombre de deuxièmes encoches (122) par le nombre de paires de pôles du moteur sans palier (110), et le nombre des aimants permanents (123 A, 123B) constituant un pôle magnétique du rotor (111).

3. Système de moteur sans palier selon les revendications 1 ou 2, dans lequel

l'unité de commande (200) ajoute un signal de correction à un signal de commande de l'un ou les deux parmi le premier onduleur (114) et le deuxième onduleur (116), ordonnant ainsi à l'un ou aux deux parmi le premier onduleur (114) et le deuxième onduleur (116) d'émettre en sortie la tension ou le courant sur lequel est superposée l'harmonique, dans lequel
le signal de correction est déterminé sur la base d'un angle électrique du rotor (111), d'une valeur de courant du bobinage (113) de support d'arbre et d'une valeur de courant du bobinage (115) de moteur.

4. Compresseur, comprenant :

le système de moteur sans palier (100) selon l'une quelconque des revendications 1 à 3 ; et
un mécanisme de compression (102, 103) entraîné par le système de moteur sans palier (100) pour comprimer un fluide.

5. Appareil de réfrigération, comprenant :
le compresseur (10) selon la revendication 4.

# FIG.1

# FIG.2

114

VOLTAGE v
CURRENT i

SHAFT
SUPPORT
INVERTER

U-PHASE

113

SHAFT SUPPORT
WINDING

V-PHASE          W-PHASE

CURRENT i [A]

TIME [s]

VOLTAGE v [V]

TIME [s]

# FIG.3

EP 4 462 672 B1

# FIG.4

# FIG.5

FIG.6

RADIAL SHAFT SUPPORT FORCE f

ELECTRICAL ANGLE $\phi$ [deg]

# FIG.7

**100**

ENCODER — $\theta$ — **117**

**111** ROTOR CORE

**115** MOTOR WINDING — vmu imu / vmv imv / vmw imw — $\tau$

**116** MOTOR INVERTER

FLUCTUATION OF MOTOR CURRENT

FLUCTUATION OF FIELD MAGNETIC FIELD (MAGNET SHAPE)

FLUCTUATION OF PERMEANCE (L-FLUCTUATION)

**101** ROTARY SHAFT — fx,fy

**113** SHAFT SUPPORT WINDING — vsu isu / vsv isv / vsw isw

**114** SHAFT SUPPORT INVERTER

**118** GAP SENSOR — x,y

---

**200**

**220** MOTOR CONTROL

**221** ROTATIONAL SPEED CALCULATION — $\omega$ — $\theta$

$\omega^*$ + / $-$ — **222** ROTATIONAL SPEED CONTROLLER

imd* / imq* + / $-$

**223** CURRENT CONTROLLER — vmd* / vmq*

**224** INVERSE dq-COORDINATE TRANSFORMATION — vmu* / vmv* / vmw*

**225** PWM MODULATION — vdc — MOTOR PWM TIMER OUTPUT

**201** ELECTRICAL ANGLE CALCULATION — $\phi$ — $\theta$

**203** ELECTRICAL ANGLE CALCULATION — $\phi$ — $\theta$

**202** dq-COORDINATE TRANSFORMATION — imu, imv, imw isu, isv, isw — imd imq / isd isq

**210** SHAFT SUPPORT CONTROL

**211** POSITION CONTROLLER — fx* / fy*

x*,y* + / $-$ — x,y

**212** SHAFT SUPPORT WINDING CURRENT COMMAND CALCULATION — isd* / isq* + / $-$

**213** CURRENT CONTROLLER — vsd* / vsq*

**214** INVERSE dq-COORDINATE TRANSFORMATION — vsu* / vsv* / vsw*

**215** PWM MODULATION — vdc — SHAFT SUPPORT PWM TIMER OUTPUT

30

# FIG.8

FIG.9A

SHAFT SUPPORT FORCE

F₀

0  60  120  180  240  300  360
ELECTRICAL ANGLE [deg]

FIG.9B

SHAFT SUPPORT FORCE
(DC COMPONENT)

F₀

0  60  120  180  240  300  360
ELECTRICAL ANGLE [deg]

FIG.9C

SHAFT SUPPORT FORCE
(FLUCTUATION COMPONENT)

0

0  60  120  180  240  300  360
ELECTRICAL ANGLE [deg]

FIG.9D

CORRECTION AMOUNT

0

0  60  120  180  240  300  360
ELECTRICAL ANGLE [deg]

# FIG.10A

| ELECTRICAL ANGLE $\phi$ | CORRECTION AMOUNT (TABLE DATA) |
|---|---|
| 0 | $FX_0$ |
| 2 | $FX_2$ |
| 4 | $FX_4$ |
| 6 | $FX_6$ |
| 8 | $FX_8$ |
| 10 | $FX_{10}$ |
| 12 | $FX_{12}$ |
| 14 | $FX_{14}$ |

# FIG.10B

| ELECTRICAL ANGLE $\phi$ | CORRECTION AMOUNT (TABLE DATA) |
|---|---|
| 0 | $FY_0$ |
| 2 | $FY_2$ |
| 4 | $FY_4$ |
| 6 | $FY_6$ |
| 8 | $FY_8$ |
| 10 | $FY_{10}$ |
| 12 | $FY_{12}$ |
| 14 | $FY_{14}$ |

# FIG.11

LEVITATION POSITION (CENTER OF LEVITATION: 0 mm)

ELECTRICAL ANGLE [deg]

EP 4 462 672 B1

# FIG.12

| | case1 | case2 | case3 |
|---|---|---|---|
| $X_2(i_{md1}, i_{mq1}, i_{sd1}, i_{sq1})$ | $X_{2\_1}$ | $X_{2\_2}$ | $X_{2\_3}$ |
| $\gamma_2(i_{md1}, i_{mq1}, i_{sd1}, i_{sq1})$ | $\gamma_{2\_1}$ | $\gamma_{2\_2}$ | $\gamma_{2\_3}$ |
| $X_6(i_{md1}, i_{mq1}, i_{sd1}, i_{sq1})$ | $X_{6\_1}$ | $X_{6\_2}$ | $X_{6\_3}$ |
| $\gamma_6(i_{md1}, i_{mq1}, i_{sd1}, i_{sq1})$ | $\gamma_{6\_1}$ | $\gamma_{6\_2}$ | $\gamma_{6\_3}$ |
| $X_{12}(i_{md1}, i_{mq1}, i_{sd1}, i_{sq1})$ | $X_{12\_1}$ | $X_{12\_2}$ | $X_{12\_3}$ |
| $\gamma_{12}(i_{md1}, i_{mq1}, i_{sd1}, i_{sq1})$ | $\gamma_{12\_1}$ | $\gamma_{12\_2}$ | $\gamma_{12\_3}$ |
| $X_{18}(i_{md1}, i_{mq1}, i_{sd1}, i_{sq1})$ | $X_{18\_1}$ | $X_{18\_2}$ | $X_{18\_3}$ |
| $\gamma_{18}(i_{md1}, i_{mq1}, i_{sd1}, i_{sq1})$ | $\gamma_{18\_1}$ | $\gamma_{18\_2}$ | $\gamma_{18\_3}$ |

## FIG.13A

SHAFT SUPPORT INVERTER OUTPUT CURRENT [A]

ELECTRICAL ANGLE $\phi$ [deg]

## FIG.13B

SHAFT SUPPORT INVERTER OUTPUT CURRENT [A]

ELECTRICAL ANGLE $\phi$ [deg]

FIG.14

# FIG.15

# FIG.16

# FIG.17

EP 4 462 672 B1

# FIG.18

# FIG.19

**EP 4 462 672 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004120886 A
- JP 2021090256 A
- JP 2016042768 A